(19)

Europäisches Patentamt

European Patent Office

Office européen des brevets

(11) **EP 4 738 197 A1**

(12) **EUROPEAN PATENT APPLICATION**

(43) Date of publication:
06.05.2026 Bulletin 2026/19

(21) Application number: 25197867.2

(22) Date of filing: 25.08.2025

(51) International Patent Classification (IPC):
*G06N 3/0464* (2023.01)   *G06N 3/0495* (2023.01)
*G06N 3/063* (2023.01)   *G06F 5/01* (2006.01)
*G06F 7/544* (2006.01)   *G06N 3/082* (2023.01)
*G06N 3/084* (2023.01)   *G06N 3/09* (2023.01)

(52) Cooperative Patent Classification (CPC):
**G06F 5/01; G06F 7/5443; G06N 3/0464;**
**G06N 3/0495; G06N 3/063;** G06N 3/082;
G06N 3/084; G06N 3/09

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: 30.10.2024 US 202418931973

(71) Applicant: Altera Corporation
San Jose, CA 95134 (US)

(72) Inventors:
• **RAHA, Arnab**
**San Jose (US)**

• **MATHAIKUTTY, Deepak Abraham**
**Chandler, 85224 (US)**
• **WU, Michael**
**Belmont, 94002 (US)**
• **SHARMA, Daksha**
**Hillsboro, 97124 (US)**
• **LANGHAMMER, Martin**
**Alderbury (GB)**

(74) Representative: **Viering, Jentschura & Partner**
**mbB**
**Patent- und Rechtsanwälte**
**Am Brauhaus 8**
**01099 Dresden (DE)**

(54) **NEURAL NETWORK ACCELERATOR PERFORMING OPERATION WITH MIXED-FORMAT WEIGHTS**

(57)      A data processing unit may include a memory, processing elements (PEs), and a control unit. The memory may store weight blocks within a weight tensor of a neural network operation. Each weight block has an input channel (IC) dimension and an output channel (OC) dimension and includes subblocks. A subblock includes one or more weights having a first data precision and one or more other weights having a second data precision. The second data precision is lower than the first data precision. The control unit may distribute different ones of the subblocks to different ones of the PEs. A PE may receive a subblock and perform a first MAC operation on a weight having a first data precision and a second MAC operation on a weight having a second data precision. The first MAC operation may consume more computation cycles or more multipliers than the second MAC operation.

1600

Store a weight tensor of a neural network operation, the weight tensor comprising weights having different data precisions
1610

↓

Distribute the weights to one or more processing elements
1620

↓

Perform , by a processing element, a first MAC operation on a weight having a first data precision and a second MAC operation on a weight having a second data precision, the second data precision lower than the first data precision
1630

**FIG. 16**

**Description**

Technical Field

This disclosure relates generally to neural networks (also referred to as "deep neural networks" or "DNN"), and more specifically, DNN accelerators that perform operations in DNNs with mixed-format weights.

Background

DNNs are used extensively for a variety of artificial intelligence (AI) applications ranging from computer vision to speech recognition and natural language processing due to their ability to achieve high accuracy. However, the high accuracy comes at the expense of significant computation cost. DNNs have extremely high computing demands as there can be a large number of operations as well as a large amount of data to read and write. Therefore, techniques to improve efficiency of DNNs are needed.

Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.

FIG. 1 illustrates an example DNN, in accordance with various embodiments.
FIG. 2 illustrates an example convolution, in accordance with various embodiments.
FIG. 3 is a block diagram of a DNN system, in accordance with various embodiments.
FIG. 4 is a block diagram of a DNN module, in accordance with various embodiments.
FIG. 5 illustrates an example sparse cell, in accordance with various embodiments.
FIG. 6 illustrates an example sparse cell array, in accordance with various embodiments.
FIG. 7 illustrates an example processing element (PE), in accordance with various embodiments.
FIG. 8 illustrates a computation schedule for a group of PEs, in accordance with various embodiments.
FIG. 9 illustrates a mixed-format map, in accordance with various embodiments.
FIG. 10 illustrates an example PE with an $8\times4$ multiplier, in accordance with various embodiments.
FIG. 11 illustrates an example PE that can perform computations with mixed-format weights, in accordance with various embodiments.
FIG. 12 illustrates another example PE that can perform computations with mixed-format weights, in accordance with various embodiments.

FIG. 13 illustrates an example bitmap used for accelerating computations in a PE, in accordance with various embodiments.
FIG. 14 illustrates mixed-format maps of different patterns, in accordance with various embodiments.
FIG. 15 illustrates an example search tree, in accordance with various embodiments.
FIG. 16 is a flowchart of a method of executing a DNN, in accordance with various embodiments.
FIG. 17 is a block diagram of an example computing device, in accordance with various embodiments.

Detailed Description

Overview

The last decade has witnessed a rapid rise in AI based data processing, particularly based on DNNs. DNNs are widely used in the domains of computer vision, speech recognition, image, and video processing mainly due to their ability to achieve beyond human-level accuracy. A DNN typically includes a sequence of layers. A DNN layer may include one or more operations, such as convolution, interpolation, layer normalization, batch normalization, SoftMax operation, pooling, elementwise operation, linear operation, nonlinear operation, and so on. These operations are referred to as deep learning operations or neural network operations.

Neural network operations may be tensor operations. Input or output data of neural network operations may be arranged in data structures called tensors. Taking a convolutional layer for example, the input tensors include an activation tensor (also referred to as "input feature map (IFM)" or "input activation tensor") including one or more activations (also referred to as "input elements") and a weight tensor. The weight tensor may be a kernel (a 2D weight tensor), a filter (a 3D weight tensor), or a group of filters (a 4D weight tensor). A convolution may be performed on the input activation tensor and weight tensor to compute an output activation tensor in the convolutional layer.

A tensor is a data structure having multiple elements across one or more dimensions. Examples of tensors include vector (which is one-dimensional (1D) tensor), matrix (which is two-dimensional (2D) tensor), three-dimensional (3D) tensors, four-dimensional (4D) tensors, and even higher dimensional tensors. A dimension of a tensor may correspond to an axis, e.g., an axis in a coordinate system. A dimension may be measured by the number of data points along the axis. The dimensions of a tensor may define the shape of the tensor. A DNN layer may receive one or more input tensors and compute an output tensor from the one or more input tensors. In some embodiments, a 3D tensor may have an X-dimension, a Y-dimension, and Z-dimension. The X-dimension of a tensor may be the horizontal dimension, the length of which may be the width of the tensor; the Y-dimension may be the vertical dimension, the length of which may be the height of the tensor; and the Z-dimension may be the channel dimension, the length of which may be the number of channels. The coordinates of the elements along a dimension may be integers in an inclusive range from 0 to (L - 1), where L is the length of the tensor in the dimension. For instance, the x coordinate of the first element in a row may be 0, the x coordinate of the second element in a row may be 1, and so on. Similarly, the y coordinate of the first element in a column may be 0, the y coordinate of the second element in a column may be 1, and so on. A 4D tensor may have a fourth dimension, which may indicate the number of batches in the operation.

Tensors in DNNs can be saved in X-major (e.g., XYZ or XZY format), Y-major formats (e.g., YXZ or YZX format), or Z-major formats (e.g., ZXY or ZYX format). The format of a tensor may define the order in which the data points in the tensor are stored, written, or read. The first character may represent the dimension in which data points are contiguous in memory. The second character may represent the dimension in which data points can be accessed after the contiguous data points are accessed in memory. The third character may represent the dimension in which data points are accessed after the data points in the dimension represented by the second character are exhausted. Taking the ZXY format for example, the access order first starts in the Z-dimension, then moves to the X-dimension, and finally moves to the Y-dimension. Data points in the tensor are contiguous in memory in the Z-dimension, meaning data points having the same (x, y) coordinates are contiguous in memory. Using tensor permutation, the tensor may be read from memory in a different format.

The significant improvements in DNN model size and accuracy coupled with the rapid increase in computing power of execution platforms have led to the adoption of DNN applications even within resource constrained mobile and edge devices that have limited energy availability. DNN models may be executed, e.g., for training or inference, by DNN accelerators. A DNN accelerator may be or include one or more data processing units (DPUs). A DPU may also be referred to as a compute block or compute tile. A DPU may include PEs that can carry out neural network operations.

In deep learning, sparsification is a technique that involves setting certain weights in the neural network to zero, which is referred to as a pruning process. This pruning process can enhance computational efficiency and performance by reducing the number of weights the network needs to process during inference. The fewer weights there is to process, the less computational power is required, making the network more efficient. Sparsity can be a promising tool for optimizing deep learning models for better speed, efficiency, and performance. Many pruning methods that aim to reduce the computational cost of deep learning workloads by exploiting zero values in weights to skip multiply-accumulate (MAC) operations can be categorized in two categories: unstructured (or random) sparsity and structured (or regular) sparsity. In unstructured sparsity cases, there are usually no constraints on the locations of the zeros. This can lead to higher sparsity for a specific accuracy target. However, many DNN accelerators cannot exploit unstructured sparsity for acceleration due to the hardware complexity associated with it. Also, many tensor operations in DNNs can be more coarse-grained and cannot take advantage of random zeros in weights. Another issue may arise for a DNN accelerator that has multiple PEs, and the workload is divided among them. In an example, each PE is assigned a weight block corresponding to a specific input channel (IC) and output channel (OC). The sparsity level can vary among PEs, which can lead to a scenario where the PE with the densest weight block takes the longest to execute. This slows down overall inference time as other PEs must wait for the slowest PE to finish. Consequently, unstructured sparse techniques do not effectively leverage hardware accelerators.

To better utilize hardware resources like multiplication units, it can be beneficial to induce regular sparse structures during the pruning process. In structured sparsity cases, regular sparse structures can be induced in the pruning process to enable efficient hardware implementations. For instance, regular structures can be induced by pruning weights channel-wise. In an example of the 2:4 sparsity pattern, for every 4 contiguous weights, 2 weights would have to be zero. Structured sparsity can help improve hardware performance. Instead of inducing zeros at random locations, zeros are introduced at specific locations that align well with our hardware architecture or a fixed number of zeros are introduced within a fixed block window. Such sparse patterns can allow the hardware to skip multiplication by zero efficiently. Although it is easier to implement accelerators that can exploit regular sparsity compared to unstructured sparsity, structured sparsity also has challenges. For example, structured sparsity is usually tied to a particular DNN accelerator architecture and cannot be used out-of-the-box for other architectures. The reduced flexibility in sparsity can lead to lower sparsity compared to unstructured sparsity for iso-accuracy. To support the efficient processing of networks with block sparse weights, highly optimized graphics processing unit (GPU) kernels have been specifically designed. These kernels are usually tailored to handle the computational patterns arising from block-wise sparsity. However, in order to maintain classification accuracy after pruning, retraining or fine-tuning of the pruned network is usually essential to mitigate performance degradation resulting from the inherently coarse nature of structured pruning compared to unstructured pruning.

Another way to reduce hardware complexity is by employing quantization, which enables the use of lower-precision multipliers like INT8 or INT4. Quantization methods can be combined with pruning techniques, where models undergo quantization followed by pruning, or both quantization and pruning are jointly considered.

An alternative approach is to perform convolutions in the log domain. In the log domain, multiplications are transformed into additions, significantly reducing computational complexity. However, this method comes with a significant drawback of decreased classification accuracy, necessitating retraining.

Embodiments of the present disclosure may improve on at least some of the challenges and issues described above by providing DNN accelerators that accelerate neural network operations using mixed-format weights. An example of mixed-format weights may be a mixture of high-precision weights with low-precision weights. Another example of mixed-format weights may be a mixture of nonzero weights with zero weights. A DNN accelerator in the present disclosure may include PEs having a microarchitecture that supports computations using mixed-format weights. Such computations are referred to as "mixed-format computations."

In various embodiments of the present disclosure, a neural network operation (e.g., a convolution) may have a 4D weight tensor. The four dimensions of the weight tensor may include an OC dimension, an IC dimension, and two spatial dimensions (e.g., X and Y). The 4D weight tensor may be compressed by modifying certain weights in the weight tensor to improve efficiency of running the neural network work. For instance, the precision (e.g., INT8) of some weights may be reduced to a lower precision (e.g., INT4), while the other weights may still have the original precision. Additionally or alternatively, the values of some weights may be changed to zeros. The weight tensor may be compressed on a block level. The weight tensor may be partitioned into blocks, which may be then compressed separately. Different blocks may have different compression ratios. A compression ratio of a block may be a ratio of a total number of compressed weights in the block to a total number of all weights in the block.

The weight tensor may be partitioned into IC-OC blocks. Each block may be a 2D tensor with one dimension being the IC dimension and the other dimension being the OC dimension. The weights in the same block may have the same spatial positions. For instance, their X and Y coordinates may be the same. In some embodiments, a single block may be distributed to a group of PEs, such as a PE array, PE column, or PE row. A single block may be partitioned into vectors along the IC dimension. The vectors within the same block may have the same compression ratio. A compression ratio of a vector may be a ratio of a total number of compressed weights in the vector to a total number of all weights in the vector. The vectors may each be distributed to a different PE in the group of PEs for performing computations in the neural network operation. As the vectors have the same compression ratio, the workload of the PEs can be balanced, which can improve the performance of the DNN accelerator.

A PE may perform mixed-format computations, such as mixed-format MAC operations. A PE may include one or more multipliers and one or more adders. Computations using compressed weight may requires less resources than uncompressed weights. In some cases, a compressed weight may be provided to the PE and be used in a single computation cycle. The multiplier may compute a product from the compressed weight and an activation. A uncompressed weight may be provided to the PE and be used in two (or more than two) computation cycles in which the multiplier may compute two (or more than two) products. For instance, the multiplier may compute a first product from an activation and a first portion of the uncompressed weight, then compute a second product from the activation and a second portion of the uncompressed weight. The PE may include a shifter that shifts the first product, then the output of the shifter may be accumulated with the second product to produce the product of the activation and the uncompressed weight. In other cases, a PE may include multiple multipliers for multiplying an uncompressed weight and an activation in a single computation cycle. The PE may process multiple compressed weights in a single computation cycle.

In embodiments where compressed weights are zeros, the compressed weights may not be provided to any PE and may be skipped from computations. The distribution of compressed and uncompressed weights to PEs may be managed by a control unit using a mixed-format map. The mixed-format map may indicate the mixed-format pattern of the weight block. For instance, the mixed-format map may have bits corresponding to all the weights and indicate whether each weight has been compressed. The mixed-format map may show positions of the compressed and uncompressed weights in the block.

Different from currently available weight pruning approaches, the weight compression approach in the present disclosure is more advantageous because the IC-OC block-level restrictions on mixed-format patterns do not have to be uniform across all IC-OC blocks and can vary from one IC-OC block to another IC-OC block. And by ensuring that the number of compressed weights in each IC vector is the same within one IC-OC block, the workload of PEs can be balanced to maximize speedup. Low-precision weights can provide a dual benefit for AI workloads by reducing compute and memory requirements. In the extreme example in which low-precision weights are zeros, these weights may not be stored or computed to eliminate compute and memory requirements for such weights.

With a combination of unstructured (or random) mixed-format pattern across blocks and structured (or regular) mixed-format pattern within a single block, the approach in the present disclosure provides a greater degree of freedom and can be leveraged by many mixed-format DNN accelerator architectures without the complexity required for supporting specialized structured and unstructured sparsity. Also, using mixed precisions for weights can maintain classification accuracy while increasing inference throughput. Furthermore, the overall sparsity bitmap footprint can be reduced by tracking IC-OC blocks instead of individual points, which can practically lead to a CK factor of sparsity bandwidth/storage savings for weights, where C and K are the IC and OC block granularities. Compared to currently available acceleration approaches, the approach in the present disclosure can lead to more effective compute acceleration with less accuracy loss.

For purposes of explanation, specific numbers, materials and configurations are set forth in order to provide a thorough understanding of the illustrative implementations. However, it will be apparent to one skilled in the art that the present disclosure may be practiced without the specific details or/and that the present disclosure may be practiced with only some of the described aspects. In other instances, well known features are omitted or simplified in order not to obscure the illustrative implementations.

Further, references are made to the accompanying drawings that form a part hereof, and in which is shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, device, or DNN accelerator that comprises a list of elements is not necessarily limited to only those elements but may include other elements not expressly listed or inherent to such method, process, device, or DNN accelerators. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description below and the accompanying drawings.

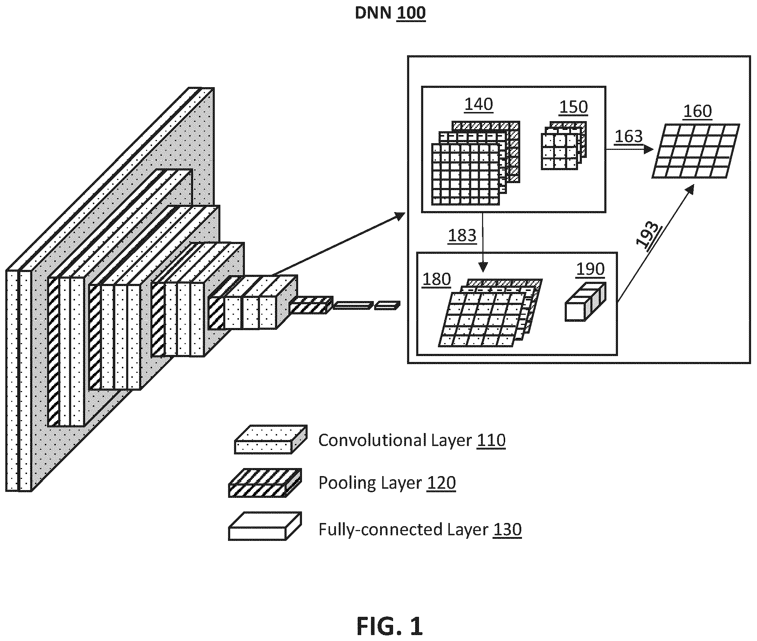

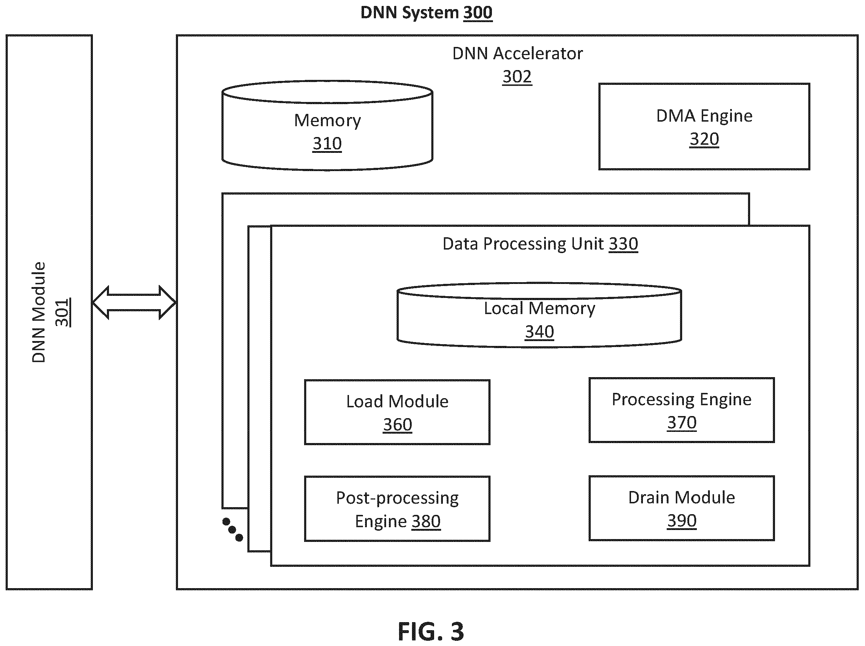

FIG. 1 illustrates an example DNN 100, in accordance with various embodiments. The DNN 100 may be executed by a DNN accelerator, e.g., the DNN accelerator 302 in FIG. 3. In an example, the DNN 100 may be a convolution-based DNN. In other examples, the DNN 100 may be other types of DNNs. For the purpose of illustration, the DNN 100 includes a sequence of layers comprising a plurality of convolutional layers 110 (individually referred to as "convolutional layer 110"), a plurality of pooling layers 120 (individually referred to as "pooling layer 120"), and a plurality of fully-connected layers 130 (individually referred to as "fully-connected layer 130"). In other embodiments, the DNN 100 may include fewer, more, or different layers. In an execution of the DNN 100, the layers of the DNN 100 execute tensor computation that includes many tensor operations, such as convolutions, interpolations, pooling operations, elementwise operations (e.g., elementwise addition, elementwise multiplication, etc.), other types of tensor operations, or some combination thereof.

The convolutional layers 110 summarize the presence of features in inputs to the DNN 100. The convolutional layers 110 function as feature extractors. The first layer of the DNN 100 is a convolutional layer 110. In an example, a convolutional layer 110 performs a convolution on an input tensor 140 (also referred to as IFM 140) and a filter 150. As shown in FIG. 1, the IFM 140 is represented by a 7×7×3 three-dimensional (3D) matrix. The IFM 140 includes 3 input channels, each of which is represented by a 7×7 two-dimensional (2D) matrix. The 7×7 2D matrix includes 7 input elements (also referred to as input points) in each row and 7 input elements in each column. The filter 150 is represented by a 3×3×3 3D matrix. The filter 150 includes 3 kernels, each of which may correspond to a different input channel of the IFM 140. A kernel is a 2D matrix of weights, where the weights are arranged in columns and rows. A kernel can be smaller than the IFM. In the embodiments of FIG. 1, each kernel is represented by a 3×3 2D matrix. The 3×3 kernel includes 3 weights in each row and 3 weights in each column. Weights can be initialized and updated by backpropagation using gradient descent. The magnitudes of the weights can indicate importance of the filter 150 in extracting features from the IFM 140.

The convolution includes multiply-accumulate (MAC) operations with the input elements in the IFM 140 and the weights in the filter 150. The convolution may be a standard convolution 163 or a depthwise convolution 183. In the standard convolution 163, the whole filter 150 slides across the IFM 140. All the input channels are combined to produce an output tensor 160 (also referred to as output feature map (OFM) 160). The OFM 160 is represented by a 5×5 2D matrix. The 5×5 2D matrix includes 5 output elements (also referred to as output points) in each row and 5 output elements in each column. For the purpose of illustration, the standard convolution includes one filter in the embodiments of FIG. 1. In embodiments where there are multiple filters, the standard convolution may produce multiple OCs in the OFM 160.

The multiplication applied between a kernel-sized patch of the IFM 140 and a kernel may be a dot product. A dot product is the elementwise multiplication between the kernel-sized patch of the IFM 140 and the corresponding kernel, which is then summed, always resulting in a single value. Because it results in a single value, the operation is often referred to as the "scalar product." Using a kernel smaller than the IFM 140 is intentional as it allows the same kernel (set of weights) to be multiplied by the IFM 140 multiple times at different points on the IFM 140. Specifically, the kernel is applied systematically to each overlapping part or kernel-sized patch of the IFM 140, left to right, top to bottom. The result from multiplying the kernel with the IFM 140 one time is a single value. As the kernel is applied multiple times to the IFM 140, the multiplication result is a 2D matrix of output elements. As such, the 2D output matrix (i.e., the OFM 160) from the standard convolution 163 is referred to as an OFM.

In the depthwise convolution 183, the input channels are not combined. Rather, MAC operations are performed on an individual input channel and an individual kernel and produce an OC. As shown in FIG. 1, the depthwise convolution 183 produces a depthwise output tensor 180. The depthwise output tensor 180 is represented by a 5×5×3 3D matrix. The depthwise output tensor 180 includes 3 OCs, each of which is represented by a 5×5 2D matrix. The 5×5 2D matrix includes 5 output elements in each row and 5 output elements in each column. Each OC is a result of MAC operations of an input channel of the IFM 140 and a kernel of the filter 150. For instance, the first OC (patterned with dots) is a result of MAC operations of the first input channel (patterned with dots) and the first kernel (patterned with dots), the second OC (patterned with horizontal strips) is a result of MAC operations of the second input channel (patterned with horizontal strips) and the second kernel (patterned with horizontal strips), and the third OC (patterned with diagonal stripes) is a result of MAC operations of the third input channel (patterned with diagonal stripes) and the third kernel (patterned with diagonal stripes). In such a depthwise convolution, the number of input channels equals the number of OCs, and each OC corresponds to a different input channel. The input channels and output channels are referred to collectively as depthwise channels. After the depthwise convolution, a pointwise convolution 193 is then performed on the depthwise output tensor 180 and a 1×1×3 tensor 190 to produce the OFM 160.

The OFM 160 is then passed to the next layer in the sequence. In some embodiments, the OFM 160 is passed through an activation function. An example activation function is rectified linear unit (ReLU). ReLU is a calculation that returns the value provided as input directly, or the value zero if the input is zero or less. The convolutional layer 110 may receive several images as input and calculate the convolution of each of them with each of the kernels. This process can be repeated several times. For instance, the OFM 160 is passed to the subsequent convolutional layer 110 (i.e., the convolutional layer 110 following the convolutional layer 110 generating the OFM 160 in the sequence). The subsequent convolutional layers 110 perform a convolution on the OFM 160 with new kernels and generate a new feature map. The new feature map may also be normalized and resized. The new feature map can be kernelled again by a further subsequent convolutional layer 110, and so on.

In some embodiments, a convolutional layer 110 has four hyperparameters: the number of kernels, the size F kernels (e.g., a kernel is of dimensions F×F×D pixels), the S step with which the window corresponding to the kernel is dragged on the image (e.g., a step of one means moving the window one pixel at a time), and the zero-padding P (e.g., adding a black contour of P pixels thickness to the input image of the convolutional layer 110). The convolutional layers 110 may perform various types of convolutions, such as 2-dimensional convolution, dilated or atrous convolution, spatial separable convolution, depthwise separable convolution, transposed convolution, and so on. The DNN 100 includes 16 convolutional layers 110. In other embodiments, the DNN 100 may include a different number of convolutional layers.

The pooling layers 120 down-sample feature maps generated by the convolutional layers, e.g., by summarizing the presence of features in the patches of the feature maps. A pooling layer 120 is placed between two convolution layers 110: a preceding convolutional layer 110 (the convolution layer 110 preceding the pooling layer 120 in the sequence of layers) and a subsequent convolutional layer 110 (the convolution layer 110 subsequent to the pooling layer 120 in the sequence of layers). In some embodiments, a pooling layer 120 is added after a convolutional layer 110, e.g., after an activation function (e.g., ReLU, etc.) has been applied to the OFM 160.

A pooling layer 120 receives feature maps generated by the preceding convolution layer 110 and applies a pooling operation to the feature maps. The pooling operation reduces the size of the feature maps while preserving their important characteristics. Accordingly, the pooling operation improves the efficiency of the DNN and avoids over-learning. The pooling layers 120 may perform the pooling operation through average pooling (calculating the average value for each patch on the feature map), max pooling (calculating the maximum value for each patch of the feature map), or a combination of both. The size of the pooling operation is smaller than the size of the feature maps. In various embodiments, the pooling operation is 2×2 pixels applied with a stride of two pixels, so that the pooling operation reduces the size of a feature map by a factor of 2, e.g., the number of pixels or values in the feature map is reduced to one quarter the size. In an example, a pooling layer 120 applied to a feature map of 6×6 results in an output pooled feature map of 3×3. The output of the pooling layer 120 is inputted into the subsequent convolution layer 110 for further feature extraction. In some embodiments, the pooling layer 120 operates upon each feature map separately to create a new set of the same number of pooled feature maps.

The fully-connected layers 130 are the last layers of the DNN. The fully-connected layers 130 may be convolutional or not. The fully-connected layers 130 receive an input operand. The input operand defines the output of the convolutional layers 110 and pooling layers 120 and includes the values of the last feature map generated by the last pooling layer 120 in the sequence. The fully-connected layers 130 apply a linear combination and an activation function to the input operand and generate a vector. The vector may contain as many elements as there are classes: element i represents the probability that the image belongs to class i. Each element is therefore between 0 and 1, and the sum of all is worth one. These probabilities are calculated by the last fully-connected layer 130 by using a logistic function (binary classification) or a SoftMax function (multi-class classification) as an activation function. In some embodiments, the fully-connected layers 130 multiply each input element by weight, make the sum, and then apply an activation function (e.g., logistic if N=2, SoftMax if N>2). This is equivalent to multiplying the input operand by the matrix containing the weights.

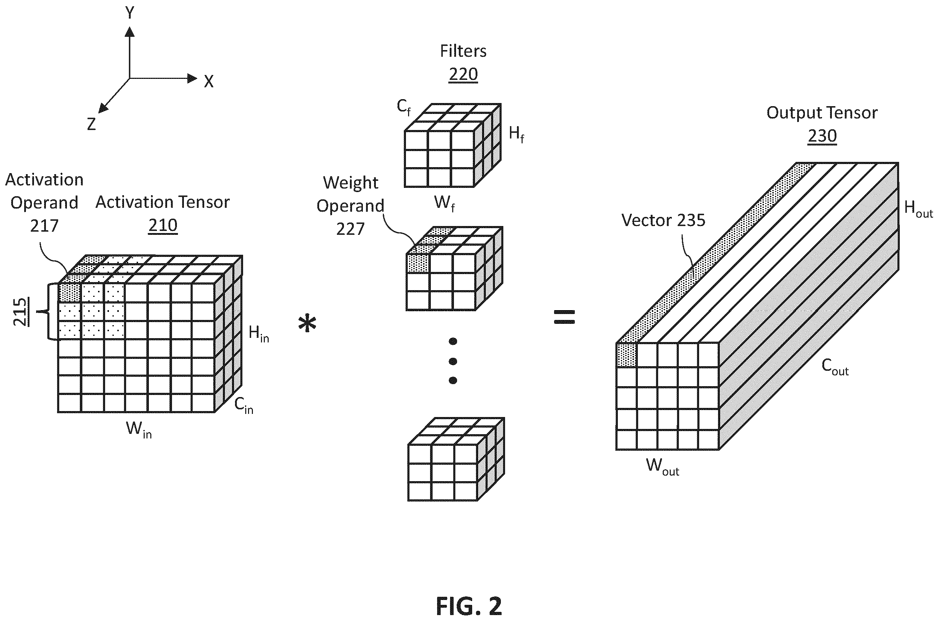

FIG. 2 illustrates an example convolution, in accordance with various embodiments. The convolution may be a deep learning operation in a convolutional layer of a DNN, e.g., a convolutional layer 110 in FIG. 1. The convolution can be executed on an activation tensor 210 and filters 220 (individually referred to as "filter 220"). The filters may constitute a weight tensor of the convolution. The result of the convolution is an output tensor 230. In some embodiments, the convolution is performed by a DNN accelerator. An example of the DNN accelerator may be the DNN accelerator 302 in FIG. 3. For instance, the convolution may be performed by one or more DPUs 330 in the DNN accelerator 302.

The activation tensor 210 may be computed in a previous layer of the DNN. In some embodiments (e.g., embodiments where the convolutional layer is the first layer of the DNN), the activation tensor 210 may be an image. In the embodiments of FIG. 2, the activation tensor 210 includes activations (also referred to as "input activations," "elements," or "input elements") arranged in a 3D matrix. The activation tensor 210 may also be referred to as an input tensor of the convolution. An input element is a data point in the activation tensor 210. The activation tensor 210 has a spatial size $H_{in} \times W_{in} \times C_{in}$, where $H_{in}$ is the height of the 3D matrix (i.e., the length along the Y axis, which indicates the number of activations in a column in the 3D matrix of each input channel), $W_{in}$ is the width of the 3D matrix (i.e., the length along the X axis, which indicates the number of activations in a row in the 2D matrix of each input channel), and $C_{in}$ is the depth of the 3D matrix (i.e., the length along the Z axis, which indicates the number of input channels). For the purpose of simplicity and illustration, the activation tensor 210 has a spatial size of 7×7×3, i.e., the activation tensor 210 includes three input channels and each input channel has a 7×7 2D matrix. Each input element in the activation tensor 210 may be represented by a (X, Y, Z) coordinate. In other embodiments, the height, width, or depth of the activation tensor 210 may be different.

Each filter 220 includes weights arranged in a 3D matrix. The values of the weights may be determined through training the DNN. A filter 220 has a spatial size $H_f \times W_f \times C_f$, where $H_f$ is the height of the filter (i.e., the length along the Y axis, which indicates the number of weights in a column in each kernel), $W_f$ is the width of the filter (i.e., the length along the X axis, which indicates the number of weights in a row in each kernel), and $C_f$ is the depth of the filter (i.e., the length along the Z axis, which indicates the number of channels). In some embodiments, $C_f$ equals $C_{in}$. For purpose of simplicity and illustration, each filter 220 in FIG. 2 has a spatial size of $2 \times 3 \times 3$, i.e., the filter 220 includes 2 convolutional kernels with a spatial size of $2 \times 3$. In other embodiments, the height, width, or depth of the filter 220 may be different. The spatial size of the convolutional kernels is smaller than the spatial size of the 2D matrix of each input channel in the activation tensor 210.

An activation or weight may take one or more bytes in a memory. The number of bytes for an activation or weight may depend on the data format. For example, when the activation or weight has an INT8 format, the activation takes one byte. When the activation or weight has a FP16 format, the activation or weight takes two bytes. Other data formats may be used for activations or weights.

In the convolution, each filter 220 slides across the activation tensor 210 and generates a 2D matrix for an output channel in the output tensor 230. In the embodiments of FIG. 2, the 2D matrix has a spatial size of $5 \times 5$. The output tensor 230 includes activations (also referred to as "output activations," "elements," or "output element") arranged in a 3D matrix. An output activation is a data point in the output tensor 230. The output tensor 230 has a spatial size $H_{out} \times W_{out} \times C_{out}$, where $H_{out}$ is the height of the 3D matrix (i.e., the length along the Y axis, which indicates the number of output activations in a column in the 2D matrix of each output channel), $W_{out}$ is the width of the 3D matrix (i.e., the length along the X axis, which indicates the number of output activations in a row in the 2D matrix of each output channel), and $C_{out}$ is the depth of the 3D matrix (i.e., the length along the Z axis, which indicates the number of output channels). $C_{out}$ may equal the number of filters 220 in the convolution. $H_{out}$ and $W_{out}$ may depend on the heights and weights of the activation tensor 210 and each filter 220. In an example where the kernel size is $1 \times 1$, $H_{out}$ and $W_{out}$ may equal to $H_{in}$ and $W_{in}$, respectively.

As a part of the convolution, MAC operations can be performed on a $2 \times 3 \times 3$ subtensor 215 (which is highlighted with a dotted pattern in FIG. 2) in the activation tensor 210 and each filter 220. The result of the MAC operations on the subtensor 215 and one filter 220 is an output activation. In some embodiments (e.g., embodiments where the convolution is an integral convolution), an output activation may include 8 bits, e.g., one byte. In other embodiments (e.g., embodiments where the convolution is a floating-point convolution), an output activation may include more than one byte. For instance, an output element may include two bytes.

After the MAC operations on the subtensor 215 and all the filters 220 are finished, a vector 235 is produced. The vector 235 is highlighted with a dotted pattern in FIG. 2. The vector 235 includes a sequence of output activations, which are arranged along the Z axis. The output activations in the vector 235 have the same (x, y) coordinate, but the output activations correspond to different output channels and have different Z coordinates. The dimension of the vector 235 along the Z axis may equal the total number of output channels in the output tensor 230. After the vector 235 is produced, further MAC operations are performed to produce additional vectors till the output tensor 230 is produced. In the embodiments of FIG. 2, the output tensor 230 is computed in a Z-major format. When the output tensor 230 is computed in the ZXY format, the vector that is adjacent to the vector 235 along the X axis may be computed right after the vector 235. When the output tensor 230 is computed in the ZYX format, the vector that is adjacent to the vector 235 along the Y axis may be computed right after the vector 235. The output tensor 230 may be permuted, e.g., by the drain module 390, and stored in a memory (e.g., the local memory 340) in an X-major format or Y-major format.

In some embodiments, the MAC operations on a $3 \times 3 \times 3$ subtensor (e.g., the subtensor 215) and a filter 220 may be performed by a plurality of MAC units. One or more MAC units may receive an input operand (e.g., an activation operand 217 shown in FIG. 2) and a weight operand (e.g., the weight operand 227 shown in FIG. 2). The activation operand 217 includes a sequence of activations having the same (x, y) coordinate but different z coordinates. The activation operand 217 includes an activation from each of the input channels in the activation tensor 210. The weight operand 227 includes a sequence of weights having the same (x, y) coordinate but different z coordinates. The weight operand 227 includes a weight from each of the channels in the filter 220. Activations in the activation operand 217 and weights in the weight operand 227 may be sequentially fed into a MAC unit. The MAC unit may receive an activation and a weight ("an activation-weight pair") at a time and multiple the activation and the weight. The position of the activation in the activation operand 217 may match the position of the weight in the weight operand 227. The activation and weight may correspond to the same channel.

Activations or weights may be floating-point numbers. Floating-point numbers may have various data formats, such as FP32, FP16, BF16, and so on. A floating-point number may be a positive or negative number with a decimal point. A floating-point number may be represented by a sequence of bits that includes one or more bits representing the sign of the floating-point number (e.g., positive or negative), bits representing an exponent of the floating-point number, and bits representing a mantissa of the floating-point number. The mantissa is the part of a floating-point number that represents the significant digits of that number. The mantissa is multiplied by the base raised to the exponent to give the actual value of the floating-point number.

In some embodiments, the output activations in the output tensor 230 may be further processed based on one or more activation functions before they are written into the memory or inputted into the next layer of the DNN. The processing based on the one or more activation functions may be at least part of the post processing of the convolution. In some embodiments, the post processing may include one or more other computations, such as offset computation, bias computation, and so on. The results of the post processing may be stored in a local memory of the compute block and be used as input to the next DNN layer. In some embodiments, the input activations in the activation tensor 210 may be results of post processing of the previous DNN layer.

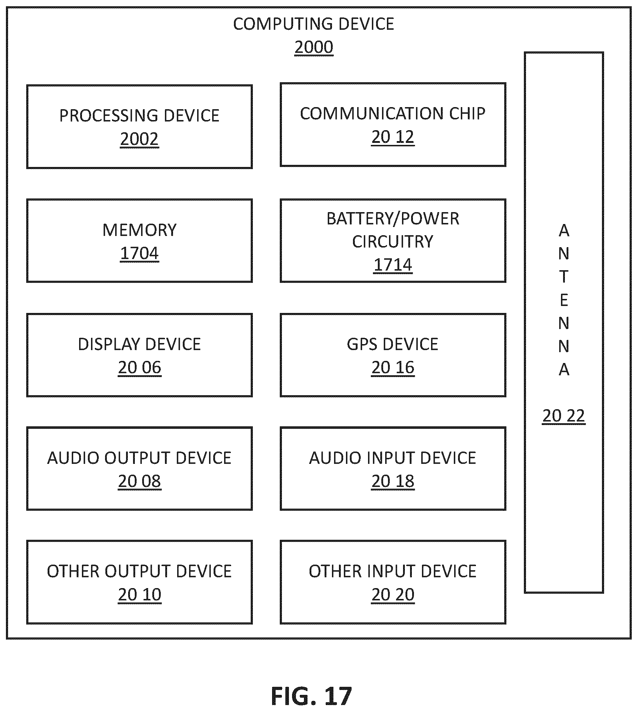

FIG. 3 is a block diagram of a DNN system 300, in accordance with various embodiments. The whole DNN system 300 or a part of the DNN system 300 may be implemented in one or more computing devices, such as the computing device 2000 in FIG. 17. The DNN system 300 can generate and execute DNNs. As shown in FIG. 3, the DNN system 300 includes a DNN module 301 and a DNN accelerator 302. In other embodiments, alternative configurations, different or additional components may be included in the DNN system 300. For instance, the DNN system 300 may include multiple DNN modules or multiple DNN accelerators. Further, functionality attributed to a component of the DNN system 300 may be accomplished by a different component included in the DNN system 300 or a different system. In some embodiments, the DNN module 301 and DNN accelerator 302 may include different types of processing units. In an example, the DNN module 301 may be implemented by one or more central processing units (CPUs). The DNN accelerator 302 may also be referred to as an AI accelerator or an AI processor. The DNN module 301 and DNN accelerator 302 may be implemented in the same chip or separate chips.

The DNN module 301 facilitates generation and deployment of DNNs. In some embodiments, the DNN module 301 may generate and train DNNs. For instance, the DNN module 301 can define the layered architecture of a DNN. The DNN module 301 can also determine the internal parameters of the DNN through a DNN training process. The DNN module 301 may also determine one or more hyperparameters that define how the DNN is trained. An example hyperparameter is a sparsity ratio that defines the sparsity level of one or more deep learning tensors for the DNN. The DNN module 301 may also compress DNNs, e.g., during or after training. In some embodiments, the DNN module 301 may prune weights in one or more layers of a DNN by changing nonzero weight to zeros. The DNN module 301 may prune weights based on a target weight sparsity ratio. A weight sparsity ratio may be the ratio of the number of zero weights to the total number of weights. In an example where the DNN module 301 prunes weight during DNN training, the DNN module 301 may prune weight of a layer to achieve a target sparsity ratio after one or more epochs. The DNN module 301 may prevent the pruned weights from changing values during the rest of the training process. Alternatively, the DNN module 301 may allow the pruned weights to change values so that a pruned, zero weight may have a nonzero value after further training. The DNN module 301 may prune weights of the layer again after one or more additional epochs.

The DNN module 301 may deploy trained, compressed, or validated DNNs for use in neural network applications. In some embodiments, the DNN module 301 may distribute trained, compressed, or validated DNNs to devices or systems which may use the DNNs to perform tasks (e.g., image classification, motion planning, etc.) for which the DNNs were trained. In other embodiments, the DNN module 301 may facilitate deployment of the DNNs using the DNN accelerator 302. For instance, the DNN module 301 may receive data from a device or system coupled with the DNN system 300 and input the received data (or data generated by the DNN module 301, e.g., based on the received data) into a DNN. The DNN module 301 may generate instructions (e.g., computer program instructions) that can be executed by the DNN accelerator 302 for DNN execution. The DNN module 301 may receive an output of the DNN from the DNN accelerator 302. The DNN module 301 may transmit the output of the DNN (or a result of processing the output of the DNN by the DNN module 301) to the device or system. In some embodiments, the DNN module 301 may control execution processes of trained, compressed, or validated DNNs. The DNN module 301 may function as a complier for DNNs executed by the DNN accelerator 302. The DNN module 301 may perform compilation of DNNs and generate compilation descriptors, based on which the DNNs may be executed.

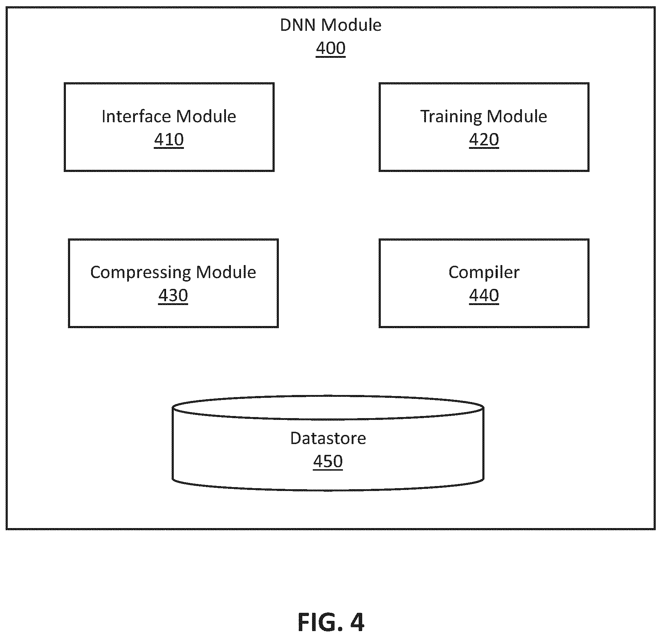

The DNN module 301 may compress neural network operations to optimize or improve the performance of the DNN accelerator 302. For instance, the DNN module 301 may modify weights of a neural network operation to reduce the memory and compute requirements for carrying out the neural network operation. The DNN module 301 may compress a weight tensor of the neural network operation on a block level and may use different compression ratios for different blocks while ensuring subblocks within the same block have the same compression ratio. Through the compression, the DNN module 301 may obtain a compressed weight tensor that has mixed formats. In an example, some weights may not be modified and have the original precision, while other weights may be modified to have a lower precision. A weight with the lower precision may have less bits and therefore, would requires less storage and compute resources. In another example, some weights may not be modified and have their original values, while other weights may be modified to have a value of zero. The zero weights may be skipped from storing in memory or being used in computations. The DNN module DNN module 301 may provide the compressed weight tensor to the DNN accelerator 302, and the latter may carry out the neural network operation using the compressed weight tensor. Certain aspects of the DNN module 301 are provided below in conjunction with FIG. 4.

The DNN accelerator 302 executes DNNs provided by the DNN module 301. For instance, the DNN accelerator 302 can execute a DNN by carrying out neural network operations in the DNN. The process of carrying out a neural network operation is also referred to as a process of executing the neural network operation or performing the neural network operation. The execution of the DNN may be for training the DNN or for using the DNN to perform AI tasks. As shown in FIG. 3, the DNN accelerator 302 includes a memory 310, a direct memory access (DMA) engine 320, and DPUs 330 (individually referred to as "DPU 330"). In other embodiments, alternative configurations, different or additional components may be included in the DNN accelerator 302. For example, the DNN accelerator 302 may include more than one memory 310 or DMA engine 320. As another example, the DNN accelerator 302 may include a single DPU 330. Further, functionality attributed to a component of the DNN accelerator 302 may be accomplished by a different component included in the DNN accelerator 302 or by a different system. A component of the DNN accelerator 302 may be implemented in hardware, software, firmware, or some combination thereof.

The memory 310 stores data associated with neural network operations performed by the DNN accelerator 302. In some embodiments, the memory 310 may store data to be used by the DPUs 330 for executing neural network operations. The memory 310 may store input activations. The memory 310 may also store weights, such as weights in kernels of convolutions, which are determined by training DNNs. In some embodiments, the memory 310 may store weights having mixed formats. The memory 310 may further store outputs of neural network operations, such as output activations. In some embodiments, the memory 310 includes one or more dynamic random-access memories (DRAMs).

The DMA engine 320 facilitates data transfer between the memory 310 and local memories of the DPUs 330. For example, the DMA engine 320 can read data from the memory 310 and write data into a local memory of a DPU 330. As another example, the DMA engine 320 can read data from a local memory of a DPU 330 and write data into the memory 310. For instance, the DMA engine 320 may read input activations and weights of convolution from the memory 310 and load the input activations and weights to one or more DPUs 330. The DMA engine 320 may also write output activations of convolutions computed by one or more DPUs 330 to the memory 310. The DMA engine 320 provides a DMA feature that allows the DPU 330 to initiate data transfer between the memory 310 and the local memories of the DPUs 330 and to perform other operations while the data transfer is being conducted. In some embodiments, the DMA engine 320 may read tensors from the memory 310, modify the tensors in a way that is optimized for the DPU 330 before it writes the tensors into the local memories of the DPUs 330.

The DPUs 330 perform neural network operations in DNNs. For instance, a DPU 330 may execute a DNN layer by running one or more deep learning operations in the DNN layer. A DPU 330 may execute a layer, or a portion of a layer, at a time. In some embodiments, the operations of the DNN layers may be run by multiple DPUs 330 in parallel. For instance, multiple DPUs 330 may each perform a portion of a workload for a neural network operation. Data may be shared between the DPUs 330. A DPU 330 may also be referred to as a neural processing unit, a compute block, or a compute tile.

The DPUs 330 may be capable of running various types of neural network operations, such as convolution (including depthwise convolutions), layer normalization, SoftMax operation, pooling, elementwise operation, linear operation, nonlinear operation, and so on. N=Neural network operations performed by the DPUs 330 include tensor operations, i.e., operations whose inputs are tensors or operations whose outputs are tensors. In an example, the DPU 330 receives an input tensor and one or more convolutional kernels and performs a convolution with the input tensor and convolutional kernels. The result of the convolution may be an output tensor, which can be further computed, e.g., by the DPU 330 or another DPU 330.

In the embodiments of FIG. 3, each DPU 330 includes a local memory 340, a load module 360, a processing engine 370, a post-processing engine 380, and a drain module 390. Some or all the components of the DPU 330 can be implemented on the same chip. In other embodiments, alternative configurations, different or additional components may be included in the DPU 330. Further, functionality attributed to a component of the DPU 330 may be accomplished by a different component included in the DPU 330, a different DPU 330, another component of the DNN accelerator 302, or a different system. A component of the DPU 330 may be implemented in hardware, software, firmware, or some combination thereof.

The local memory 340 is local to the corresponding DPU 330. In the embodiments of FIG. 3, the local memory 340 is inside the DPU 330. In other embodiments, the local memory 340 may be outside the DPU 330. Data in the local memory 340 may be transferred to or from the memory 310, e.g., through the DMA engine 320. In some embodiments, data in the local memory 340 may be transferred to or from the local memory of another DPU 330. The local memory 340 may store data received, used, or generated by the load module 360, the processing engine 370, the post-processing engine 380, or the drain module 390. Examples of the data may include input activations, weights, output activations, sparsity bitmaps, and so on.

In some embodiments, the local memory 340 may store tensors to be processed by the processing engine 370 or the post-processing engine 380. The tensors may be input tensors of deep learning operations. The local memory 340 may store weights of mixed weights. The local memory 340 may also store tensors generated by the processing engine 370 or the post-processing engine 380. The tensors may be output tensors of deep learning operations. The layout of data points of a tensor in the local memory 340 may depend on the format in which the tensor is stored. In some embodiments, the local memory 340 may store tensors in various formats, including Z-major (e.g., ZXY or ZYX) format, X-major (e.g., XYZ or XZY) format, and Y-major (e.g., YXZ or YZX) format. For a tensor with Z-major format, the local memory 340 may store data points having the same (x, y) coordinate contiguously. For instance, the data points having the same (x, y) coordinate may be stored at a sequence of memory addresses in the local memory 340. For a tensor with the ZXY format or ZYX format, the local memory 340 may store data points having the same (x, y) coordinate contiguously. For instance, the data points having the same (x, y) coordinate may be stored at a sequence of memory addresses in the local memory 340. For a tensor with X-major format, the local memory 340 may store data points having the same (y, z) coordinate contiguously. For a tensor with Y-major format, the local memory 340 may store data points having the same (x, z) coordinate contiguously.

In some embodiments, the local memory 340 includes one or more static random-access memories (SRAMs). The local memory 340 may be byte-addressable, and each memory address identifies a single byte (eight bits) of storage. In some embodiments, the local memory 340 may include memory banks. The number of data banks in the local memory 340 may be 16, 64, 128, 356, 512, 1024, 2048, or other numbers. A memory bank may include a plurality of storage units. In an example, a data bank may include 8, 16, 64, or a different number of storage units. A memory bank or a storage unit in a memory bank may have a memory address. In an example, a storage unit may store a single byte, and data larger than a single byte may be stored in storage units with consecutive memory addresses, i.e., adjacent storage units. For instance, a storage unit can store an integer number in the INT8 format, versus two storage units may be needed to store a number in the FP16 or BF16 format, which has 16 bits. In some embodiments, 16 bits can be transferred from the local memory 340 in a single read cycle. In other embodiments, 16 bits can be transferred from the local memory 340 in multiple read cycles, such as two cycles.

The load module 360 loads data from the local memory 340 to the processing engine 370 or to the post-processing engine 380. The load module 360 may read tensors from the local memory 340. The tensors may include activation tensors, weights tensor (including compressed weight tensors), and so on. In some embodiments, the load module 360 may read data from the local memory 340 and write the data into storage units in the processing engine 370. For instance, the load module 360 may load activations into activation register files in the processing engine 370 and load weights into weight register files in the processing engine 370.

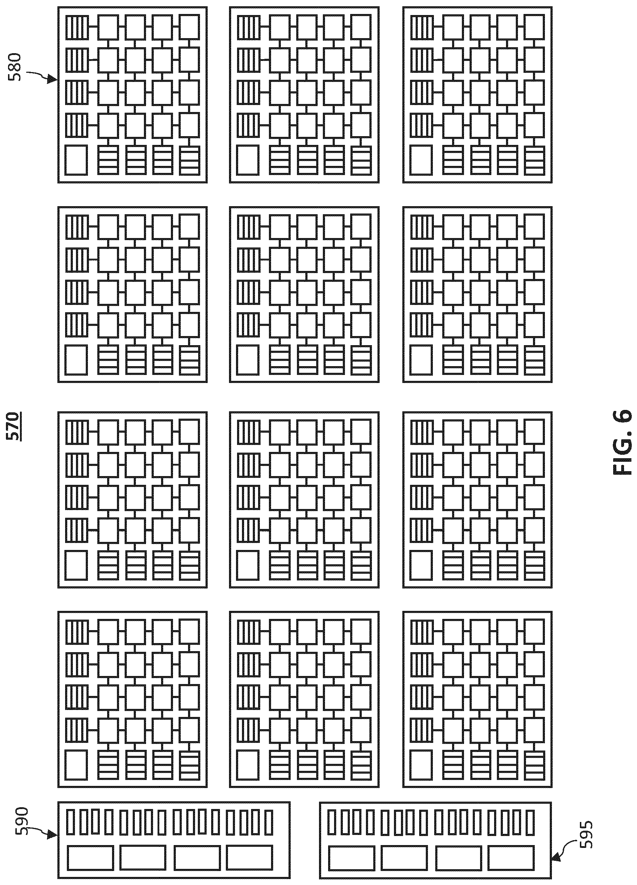

The load module 360 may load weights on a block level. In some embodiments, the load module 360 may load a weight block to one or more storage units associated with one or more PE groups. Examples of these storage units may include the activation memory 590 and weight memory 595 in FIG. 6. The weight block may be a 2D tensor with an IC dimension and an OC dimension. The weight block may have weights with different precisions, such as a combination of INT8 weight and INT4 weights or a combination of nonzero weights and zero weights. The load module 360 may load different weight blocks into storage units of different PE groups.

The processing engine 370 performs operations in DNNs. The processing engine 370 may accelerate neural network operations based on mixed precision in data. The processing engine 370 may include one or more processing cells. In some embodiments, the processing cells may be arranged in one or more rows and one or more columns in the processing engine 370. Each processing cell may include PEs that may be arranged in an array that includes rows and columns. All the PEs in the processing engine 370 may constitute a bigger array that includes more rows and columns. An example PE may be or may include one or more MAC units that can perform MAC operations. In some embodiments (e.g., embodiments where the DPU 330 executes a convolutional layer), a computation in an MAC unit may be an MAC operation on an activation operand and a weight operand. The activation operand may be an activation tensor that may include one or more activations in the input tensor of the convolution. Different activations may be in different input channels. The weight operand may be a weight tensor that may include one or more weights in the filter of the convolution. The values of the weights are determined through training the DNN or compressing the neural network operation after training. The weights in the weight operand may be in different input channels. In some embodiments, the activation operand or weight operand is a vector along the IC dimension.

In some embodiments, an MAC unit includes one or more multipliers for performing multiplications. An MAC unit may also include one or more accumulators ("adders") for performing accumulations. An MAC unit may also include one or more shifters to facilitate mixed-precision computations. A column of MAC units is referred to as an MAC column. An MAC column may be associated with one or more MAC lanes. A MAC lane is a path for loading data e.g., by the load module 360, into an MAC column. A MAC lane may be also referred to as a data transmission lane or data loading lane. An MAC column may have multiple MAC lanes. The loading bandwidth of the MAC column is an aggregation of the loading bandwidths of all the MAC lanes associated with the MAC column. With a certain number of MAC lanes, data can be fed into the same number of independent MAC units simultaneously. In some embodiments where an MAC column has four MAC lanes for feeding activations or weights into the MAC column and each MAC lane may have a bandwidth of 16 bytes, the four MAC lanes can have a total loading bandwidth of 64 bytes.

In some embodiments, the processing engine 370 may be capable of depthwise convolution, standard convolution, or both. In a depthwise convolution, an MAC unit may perform an MAC operation that includes a sequence of multiplications for an input operand and a weight operand. Each multiplication in the sequence (also referred to as a cycle) is a multiplication of a different activation in the input operand with a different weight in the weight operand. The activation and weight in the same cycle may correspond to the same channel. The sequence of multiplication produces a product operand that includes a sequence of products. The MAC operation may also include accumulations in which multiple product operands are accumulated to produce an output operand of the MAC unit. The processing engine 370 may output multiple output operands at a time, each of which is generated by a different MAC unit. In a standard convolution, MAC operations may include accumulations across the channels. For instance, as opposed to generating an output operand, a MAC unit may accumulate products across different channels to generate a single output point.

In some embodiments, the processing engine 370 may include acceleration logic for facilitating mixed-format based acceleration. For instance, each processing cell in the processing engine 370 may include one or more acceleration modules. In an example, each MAC column or each MAC row may have a corresponding acceleration module that accelerates MAC operations in the MAC column or MAC row. In some embodiments, an acceleration module accelerates computations in the processing engine 370 based on mixed formats in weight blocks. The acceleration module may include a storage unit that stores a mixed-format map (e.g., a mixed-precision bitmap), which may be loaded to the storage unit by the load module 360. The mixed-format map may indicate the mixed-format pattern of a weight block and shows the positions of uncompressed weight and positions of compressed weights in the weight block.

In some embodiments, a mixed-format map of a weight block may have the same number of elements as the weight block and these elements are arranged in a data structure having the same shape as the weight block. An element in the mixed-format map may indicate whether the corresponding element (i.e., weight) in the weight block is compressed or uncompressed. For instance, a zero element in the mixed-format map may indicate that the corresponding weight is compressed (for instance, the weight has a lower precision or has a zero value). A one-valued element in the mixed-format map may indicate that the corresponding weight is uncompressed (for instance, the weight has a higher precision or has a nonzero value). The acceleration module may use the mixed-format map to identify activations and weights to be used in MAC operations by the MAC units and to transfer the identified activations and weights to the storage units (e.g., register files) of the MAC units. The acceleration module may determine the computation cycle(s) in which an activation or weight is to be used by the MAC unit. Additionally or alternatively, the acceleration module may determine whether an activation or weight will be used by the MAC unit or not.

The post-processing engine 380 processes outputs of the processing engine 370. The post-processing engine 380 may include one or more post-PEs. In some embodiments, the post-PEs in the post-processing engine 380 may be arranged in an array that has rows and columns. In some embodiments, the post-processing engine 380 computes activation functions. The post-processing engine 380 may receive outputs of the processing engine 370 as inputs to the activation functions. In addition or alternative to activation functions, the post-processing engine 380 may perform other types of post processing on outputs of the processing engine 370. For instance, the post-processing engine 380 may apply a bias on an output of the processing engine 370. In some embodiments, the post-processing engine 380 may be bypassed for certain neural network operations.

The drain module 390 drains data from the processing engine 370 or from the post-processing engine 380. The drain module may write the data to the local memory 340. The drained data may be tensors, such as output tensors of neural network operations. In some embodiments, the drain module 390 may drain data on a cell level. For each processing cell, the drain module 390 may drain outputs of PEs in the processing cell based on a row index or column index of each PE. For instance, the drain module 390 may use a sequence of cycles to drain data from a processing cell. The drain module 390 may drain the output of some of the PEs in each cycle. The sequence of the cycles may be configured based on a configuration parameter indicating the operation mode of the load module 360.

In some embodiments, the drain module 390 includes sparsity encoding logic that can convert outputs of the processing engine 370 from a dense format to a sparse format. For instance, the drain module 390 may be implemented with one or more sparsity encoders. A sparsity encoder converts dense data to compressed data based on sparsity in the dense data. For instance, the sparsity encoder may remove zeros in an activation tensor computed by the processing engine 370 to convert the activation tensor to a compressed activation tensor. The sparsity encoder may also generate mixed-format maps, including activation mixed-format maps.

In some embodiments, the data drained from the processing engine 370 may be at least part of an output tensor (e.g., the output tensor 230 in FIG. 2) of a deep learning operation. The sparsity encoder may generate a compressed version of the output tensor. The sparsity encoder may identify every zero activation in the output tensor and remove these activations from the output tensor to generate a compressed activation tensor (aka "sparse activation tensor"). The sparsity encoder may also generate one or more mixed-format maps for the output tensor. A mixed-format map may correspond to a portion of the output tensor (e.g., the vector 235 in FIG. 2). The mixed-format map may include sparsity elements (e.g., bits), each of which corresponds to a different activation in the vector and indicates whether the corresponding activation is zeroed or not.

The drain module 390 may write the compressed activation tensor and the one or more mixed-format maps into the local memory 340. The sparse activation tensor and the one or more mixed-format maps may be further loaded to the memory 310, e.g., through the DMA engine 320. Additionally or alternatively, the sparse activation tensor and the one or more mixed-format maps may be loaded by the load module 360 to the processing engine 370 for further computation, e.g., for performing a deep learning operation in the next layer.

FIG. 4 is a block diagram of a DNN module 400, in accordance with various embodiments. The DNN module 400 may be an embodiment of the DNN module 301 in FIG. 3. As shown in FIG. 4, the DNN module 400 includes an interface module 410, a training module 420, a compressing module 430, a compiler 440, and a datastore 450. In other embodiments, alternative configurations, different or additional components may be included in the DNN module 400. Further, functionality attributed to a component of the DNN module 400 may be accomplished by a different component included in the DNN module 400 or a different module or system.

The interface module 410 facilitates communications of the DNN module 400 with other modules or systems. For example, the interface module 410 establishes communications between the DNN module 400 with an external database to receive data that can be used to train DNNs or input into DNNs to perform tasks. As another example, the interface module 410 may distribute trained DNNs to other systems, e.g., computing devices configured to apply DNNs to perform tasks.

The training module 420 trains DNNs by using a training dataset. The training module 420 forms the training dataset. In an example where the training module 420 trains an DNN to recognize objects in images, the training dataset includes training images and training labels. The training labels describe ground-truth classifications of objects in the training images. In some embodiments, each label in the training dataset corresponds to an object in a training image. In some embodiments, a part of the training dataset may be used to initially train the DNN, and the rest of the training dataset may be held back as a validation subset used by the training module 420 to validate performance of a trained DNN. The data portion of the training dataset not including the tuning subset and the validation subset may be used to train the DNN.

The training module 420 also determines hyperparameters for training the DNN. Hyperparameters are variables specifying the DNN training process. Hyperparameters are different from parameters inside the DNN (e.g., weights of filters). In some embodiments, hyperparameters include variables determining the architecture of the DNN, such as number of hidden layers, etc. Hyperparameters also include variables which determine how the DNN is trained, such as batch size, number of epochs, etc. A batch size defines the number of training samples to work through before updating the parameters of the DNN. The batch size is the same as or smaller than the number of samples in the training dataset. The training dataset can be divided into one or more batches. The number of epochs defines how many times the entire training dataset is passed forward and backwards through the entire network. The number of epochs defines the number of times that the deep learning algorithm works through the entire training dataset. One epoch means that each training sample in the training dataset has had an opportunity to update the parameters inside the DNN. An epoch may include one or more batches. The number of epochs may be 1, 5, 10, 50, 100, 500, 1000, or even larger.

The training module 420 defines the architecture of the DNN, e.g., based on some of the hyperparameters. The architecture of the DNN includes an input layer, an output layer, and a plurality of hidden layers. The input layer of an DNN may include tensors (e.g., a multidimensional array) specifying attributes of the input image, such as the height of the input image, the width of the input image, and the depth of the input image (e.g., the number of bits specifying the color of a pixel in the input image). The output layer includes labels of objects in the input layer. The hidden layers are layers between the input layer and output layer. The hidden layers include one or more convolutional layers and one or more other types of layers, such as pooling layers, fully-connected layers, normalization layers, SoftMax or logistic layers, and so on. The convolutional layers of the DNN abstract the input image to a feature map that is represented by a tensor specifying the feature map height, the feature map width, and the feature map channels (e.g., red, green, blue images include 3 channels). A pooling layer is used to reduce the spatial volume of input image after convolution. It is used between two convolution layers. A fully-connected layer involves weights, biases, and neurons. It connects neurons in one layer to neurons in another layer. It is used to classify images between different categories by training.

In the process of defining the architecture of the DNN, the training module 420 also adds an activation function to a hidden layer or the output layer. An activation function of a layer transforms the weighted sum of the input of the layer to an output of the layer. The activation function may be, for example, a ReLU activation function, a tangent activation function, or other types of activation functions.

After the training module 420 defines the architecture of the DNN, the training module 420 inputs a training dataset into the DNN. The training dataset includes a plurality of training samples. An example of a training sample includes an object in an image and a ground-truth label of the object. The training module 420 modifies the parameters inside the DNN ("internal parameters of the DNN") to minimize the error between labels of the training objects that are generated by the DNN and the ground-truth labels of the objects. The internal parameters include weights of filters in the convolutional layers of the DNN. In some embodiments, the training module 420 uses a cost function to minimize the error.

The training module 420 may train the DNN for a predetermined number of epochs. The number of epochs is a hyperparameter that defines the number of times that the deep learning algorithm will work through the entire training dataset. One epoch means that each sample in the training dataset has had an opportunity to update internal parameters of the DNN. After the training module 420 finishes the predetermined number of epochs, the training module 420 may stop updating the parameters in the DNN. The DNN having the updated parameters is referred to as a trained DNN.

The training module 420 may also verify accuracy of DNNs after training. In some embodiments, the training module 420 inputs samples in a validation dataset into a trained DNN and uses the outputs of the DNN to determine the model accuracy. In some embodiments, a validation dataset may be formed of some or all the samples in the training dataset. Additionally or alternatively, the validation dataset includes additional samples, other than those in the training sets. In some embodiments, the training module 420 may determine an accuracy score measuring the precision, recall, or a combination of precision and recall of the DNN. The training module 420 may use the following metrics to determine the accuracy score: Precision = TP / (TP + FP) and Recall = TP / (TP + FN), where precision may be how many the DNN correctly predicted (TP or true positives) out of the total it predicted (TP + FP or false positives), and recall may be how many the DNN correctly predicted (TP) out of the total number of objects that did have the property in question (TP + FN or false negatives). The F-score (F-score = 2 * PR / (P + R)) unifies precision and recall into a single measure.

The training module 420 may compare the accuracy score with a threshold score. In an example where the training module 420 determines that the accuracy score of the DNN is less than the threshold score, the training module 420 instructs the training module 420 to re-train the DNN. In one embodiment, the training module 420 may iteratively re-train the DNN until the occurrence of a stopping condition, such as the accuracy measurement indication that the DNN may be sufficiently accurate, or a number of training rounds having taken place.

The compressing module 430 compresses DNNs. For instance, the compressing module 430 may add compressing operations to DNN layers to reduce computational complexity or memory usage. A compressing operation may modify weights in a DNN layer. The modification may be done before, during, or after training. In some embodiments, the compressing module 430 may select one or more layers in a DNN and modify each selected layer with a compressing operation. For instance, the compressing module 430 may select computationally complex layers, such as layers with large filters. For a compressing operation of a layer or of a type of layer, the compressing module 430 may determine a weight threshold that would not cause a loss of the accuracy of the DNN to exceed an accuracy loss constraint. A compressing operation may modify weights having absolute values above the weight threshold to lower-precision values or zeros and leave the other weights unchanged.

In some embodiments, the compressing module 430 may partition a weight tensor of a DNN layer (e.g., a convolutional layer) into weight blocks. Each weight block may include weights having the same spatial positions in the weight tensor. A weight block may have an IC dimension an OC dimension. The length of the weight block in the IC dimension may be equal to or less than the number of input channels of the DNN layer. The length of the weight block in the OC dimension may be equal to or less than the number of output channels or the DNN layer. In some embodiments, each vector along the IC dimension within the weight block may constitute a weight operation to be processed by a PE. The weights in the vector may be in different input channels but in the same OC. Different vectors may be processed by different PEs. To balance the workload of the PEs, the compiler 440 may find a mixed-format pattern that ensures all the vectors within the weight block have the same number of compressed weights.

To determine the mixed-format pattern of a weight block, the compiler 440 may identify the weights with the smallest absolute value(s) and compress the identified weights by either lowering the precision of these weights or changing their values to zero. This compression method may minimize the mean squared error (MSE) while ensuring an equal number of weights are compressed in each vector within the weight block. This can ensure that the processing speed of all the vectors would be the same, allowing all the PEs to finish at the same time for processing this weight block. In some embodiments, the compiler 440 solves the minimization problem as an optimization task subject to a constraint.

In an example in which the compressing operation is a pruning operation, W denotes the original weight block, $M_K$ be a binary matrix with a size $r \times c$ where r may be the height of the weight block and equal the number of input channels and c may be the width of the weight block and equal the number of output channels. W' = M $\odot$ W denotes the compressed the weight block. The binary matrix $M_K$ may include ones and zeros and may pinpoint the locations of zero values when forming the compressed weight block W'. The compiler 440 may minimize the MSE between $W'$ and $W$ while ensuring that each column of $W'$ has K zeros. The objective function to minimize the MSE can be written as:

$$\text{MSE} = \min \sum_{i=1}^{r} \sum_{j=1}^{c} (m_{i,j} w_{i,j} - w_{i,j})^2 ,$$

where $m_{i,j}$ denotes an element in the binary matrix $M_K$, and denotes a weight in the weight block W. Subject to the constraint that each column of $W'$ has k zeros, where the constraint on the jth column can be written as:

$$\sum_{i=1}^{r} (1 - m_{i,j}) = K$$

In some embodiments, the compiler 440 may set the smallest K absolute values of each column of W independently to zero to achieve the smallest MSE. In other embodiments (e.g., for other arbitrary objective functions), the compiler 440 may iterate over some or all possible binary mask matrices satisfying the constraint and minimize the objective function, e.g., by using the brute-force approach.

In some embodiments, the neural network operation may have N input channels and P output channels. The compiler 440 may divide the N×P IC-OC matrix into multiple r×c weight blocks. The compiler 440 may apply padding to the N×P IC-OC matrix when its dimensions are not a multiple of r×c. The DNN accelerator may process weight blocks inner channel-wise. There may be N/r rows by P/c columns of weight blocks that needs to be processed. Without loss of generality, the P/c columns may be processed independently. The compiler 440 may balance sparsity or precision one column at a time. Alternatively, the compiler 440 may balance sparsity or precision among s weight blocks at a time, where each weight block has a size of r×c and N=s×r.

The compiler 440 may find a mixed-format pattern that can balance the overall processing time. In a uniform approach, each weight block independently with the aim of finding K/n zeros per column within each block. While this approach seeks to balance overall processing time, it may not represent the most optimal strategy. For instance, there may exist superior sparsity patterns that result in lower MSE between the sparsified weights and the original weights. In an example with 4 blocks (s=4) and a target of 16 zeros (K=16), K=16/4=4 zeros may be allocated for each block, totaling 4+4+4+4=16. However, a more effective partition might involve distributing 3 zeros per column within the first block, 4 zeros per column within the second, 6 zeros per column within the third, and 3 zeros per column for the last weight block, summing up to 3+4+6+3=16. The MSE approach may involve reconsidering the allocation of zeros for each sunblock jointly. Rather than uniformly distributing zeros, the compiler 440 may explore all possible partitions to identify the optimal partition that minimizes the MSE. The search space can be extensive, akin to the integer partition problem, with O(K^s) possibilities.

In some embodiments, the compiler 440 may identify all s-length integer sequences that sum up to K. The count of such sequences is choose(K-1,s-1). For typical values of K and s, the search space can become quite large. In an example with s=8, there can be 8 weight subblocks, each of which has a size of 32x16, and K=64. The compression ratio in this example may be 64/(32x8) =25%. The number of sequences to explore would choose (63,7), totaling 553,270,671 possibilities. The compiler 440 may mitigate this complexity by using tree search.

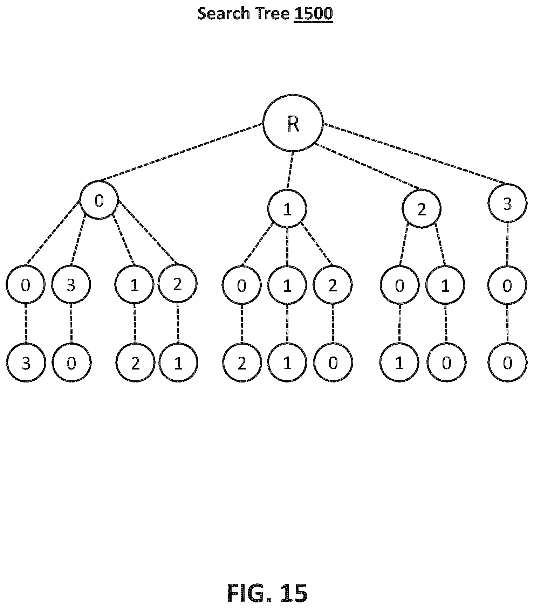

The compiler 440 may perform a tree search to find an optimal or near-optimal solution to minimize the MSE or another types of error metric. The search space encompasses all potential configurations of zeros for the weight blocks. The compiler 440 may generate a search tree with nodes arranged in a hierarchical structure (i.e., the tree) that includes a sequence of levels. Each node in the search tree may represent a specific number of zeros allocated to a weight block, with each level corresponding to a possible zero allocation for a different weight block. Certain aspects of tree search are described below in conjunction with FIG. 15.

The compiler 440 may effectively manage the search process and strike a balance between exploration and computational resources. In some embodiments, the compiler 440 may terminate the tree search early to reduce the search complexity. For example, the compiler 440 may define a threshold for the error metric. The compiler 440 may terminate the search once the best error metric of the current path falls at or below this threshold. This approach can halt the search upon finding an acceptable solution. As another example, the compiler 440 may limit the number of paths in the tree. The compiler 440 may set a maximum limit on the number of paths explored during the search process. When the search exceeds this predefined limit, the compiler 440 may terminate the search. This can prevent excessive exploration, especially in scenarios with large search spaces.

In some embodiments, the compiler 440 may partition a weight block into smaller blocks to reduce the complexity of the search space, e.g., for cases in which the search space complexity is influenced by the number of weight blocks under consideration. In an example of 4 r×c weight blocks (denoted as $W1$, $W2$, and W3, respectively) with K = 4, the compiler 440 may opt for a suboptimal partition. The compiler 440 may divide the blocks into 2 sets of 2 r×c weight blocks, each with K=2, to significantly reduce the search space.

In some embodiments, the compiler 440 may use a greedy Breadth-First Search (BFS) approach to reduce the complexity of the search space. With the greedy BFS approach, the compiler 440 may explore the search space level by level, starting from the root node. At each level, the M best partial paths with the smallest cumulative MSE (or in general any other error metric) are retained while the other paths may not be retained. This deterministic approach can limit the number of paths explored to M. The compiler 440 may determine a reasonable value for M to reduce the search space while still finding a solution with acceptable MSE.

As described above, the binary matrix $M_K$ may pinpoint the locations of zero values in the compressed weight block W' in the pruning example. In other examples (such as examples in which the compiler 440 compresses weights by reducing weight precisions), the compiler 440 may use the binary matrix $M_K$ to pinpoint the locations of lower-precision weights in the compressed weight block. In some embodiments, the compiler 440 may apply Dual Level Integer Quantization (DLIQ), in which 0 may signify a weight that is quantized to a lower precision with q bits (e.g., q=4 representing INT4), while weights with values surpassing a defined threshold remain unaltered. In other embodiments, the compiler 440 may apply Mixed Integer and Power of Two Quantization (MIP2), in which 0 may signify that a weight is quantized to a power of 2. The compiler 440 may explore all feasible binary matrices to minimize the MSE or another error metric, while adhering to the constraint that the column weight of the binary matrix $M_K$ is K.

After compressing a DNN, the compressing module 430 may fine tune the DNN, e.g., through a retraining process. The compressing module 430 may fine tunes DNNs after weights are pruned. In some embodiments, the fine-tuning process is a retraining or further training process. For instance, after weights in a DNN are pruned, the compressing module 430 may further train the DNN by inputting a training dataset into the DNN. The values of the unpruned weights in the DNN may be modified based on outputs of the DNN and ground-truth labels of the training samples in the training dataset. In some embodiments, the values of the pruned weights (i.e., zero) are not changed during the fine-tuning process. For instance, the compressing module 430 may place a mask over a pruned weight block and the mask can prevent values in the pruned weight blocks from being changed during the fine-tuning process. In other embodiments, the values of all weights, including the pruned weights, may be changed during the fine-tuning process. After one or more cycles of retraining and weight changing by the compressing module 430, the compressing module 430 may perform a new pruning process, e.g., by selecting weight blocks and pruning the selected weight blocks. In some embodiments, the weight pruning process may be repeated multiple times before the fine-tuning process is done. In some embodiments, the number of epochs in the fine-tuning process may be different from the number of epochs in the training process in which the pre-pruning values of the weights are determined. For instance, the fine-tuning process may have less epochs than the training process. In an example, the number of epochs in the fine-tuning process may be relatively small, such as 2, 3, 4, 5, and so on.

The compiler 440 compiles information of DNNs to executable instructions that can be executed, e.g., by the DNN accelerator 302, to carry out neural network operations in DNNs. In some embodiments, the compiler 405 may generate a graph representing a DNN. The graph may include nodes and edges. A node may represent a specific neural network operation in the DNN. An edge may connect two nodes and represent a connection between the two corresponding neural network operations. In an example, an edge may encode a tensor that flows from one of the neural network operations to the other neural network operation. The tensor may be an output tensor of the first neural network operation and an input tensor of the second neural network operation. The edge may encode one or more attributes of the tensor, such as size, shape, storage format, and so on. The compiler 440 may use the graph to generate executable DNNs. For instance, the compiler may generate computer program instructions for executing DNNs.

In some embodiments, the compiler 440 may generate configuration parameters that may be used to configure components of the DNN accelerator 302 for DNN executions. The configuration parameters may be stored in one or more configuration registers associated with the components of the DNN accelerator 302. In some embodiments, the compiler 440 may compile a DNN after the compressing module 430 compresses neural network operations in the DNN. For instance, the compiler 440 may generate configuration parameters that cause a load module or acceleration module in the DNN accelerator 302 to load input activations and weights into PEs in a way that can acceleration computations in the PEs based on mixed formats of weights. The compiler 440 may further generate configuration parameters for configuring components of the PEs to perform mixed-format computations. The compiler 440 may also generate configuration parameters that cause a drain module to write output activations computed by the PEs into memory.

The datastore 450 stores data received, generated, used, or otherwise associated with the DNN module 400. For example, the datastore 450 stores the datasets used by the training module 420. The datastore 450 may also store data generated by the training module 420, such as the hyperparameters for training DNNs, internal parameters of trained DNNs (e.g., weights, etc.), and so on. The datastore 450 may also store data generated by the compressing module 430, such as compressed weights, mixed-format maps, and so on. The datastore 450 may store instructions, configuration parameters, or other data generated by the compiler 440. The datastore 450 may include one or more memories. In the embodiment of FIG. 4, the datastore 450 is a component of the DNN module 400. In other embodiments, the datastore 450 may be external to the DNN module 400 and communicate with the DNN module 400 through a network.

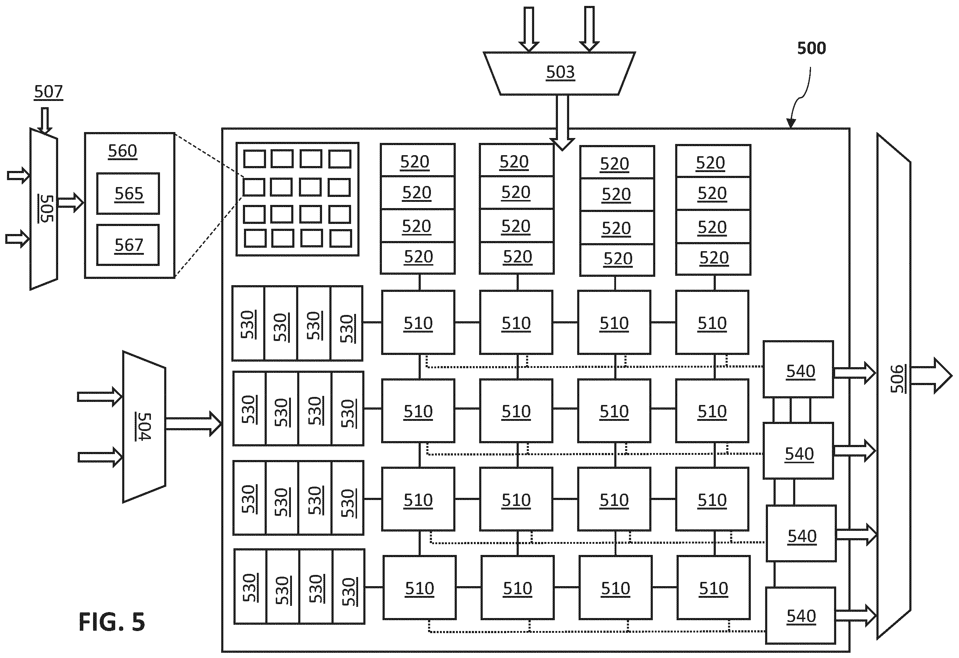

FIG. 5 illustrates an example sparse cell 500, in accordance with various embodiments. The sparse cell 500 may be a processing cell in a processing engine, e.g., the processing engine 370 in FIG. 3. The sparse cell 500 includes 16 MAC units 510 (individually referred to as "MAC unit 510"), which constitutes a MAC array having four rows and four columns. The MAC array has a spatial shape of 4x4, meaning the height of the MAC array is four and the width of the MAC array is also 5. The sparse cell 500 also includes 16 weight register files 520 (individually referred to as "weight register file 520"), 16 activation register files 530 (individually referred to as "activation register file 530"), four row buffers 540 (individually referred to as "row buffer 540"), and acceleration modules 560 (individually referred to as "acceleration module 560"). In other embodiments, the sparse cell 500 may include fewer, more, or different components. For example, the sparse cell 500 may include a different number of MAC units 510, weight register files 520, activation register files 530, row buffers 540, or acceleration modules 560. As another example, the sparse cell 500 may include column buffers in lieu of or in addition to the row buffers 540. Also, the shape (e.g., the height or width) of the MAC array may be different.

The MAC units 510 are configured to perform MAC operations. Each MAC unit 510 may include one or more multipliers and one or more adders. A multiplier may multiply an activation with a weight at a time to compute a product. In some embodiments (e.g., embodiments where the MAC unit 510 includes multiple multipliers), the multipliers may operate simultaneously to process multiple activation-weight pairs and compute multiple products in one cycle. An adder may accumulate products computed by the multipliers. Even though not shown in FIG. 5, the sparse cell may include an adder tree including a plurality of adder tiers. The first tier may receive outputs of a plurality of MAC units 510. The number of adders in the first tier may be half of the number of the MAC units 510, and each adder may accumulate the outputs of two MAC units 510. The second tier may receive outputs of adders in the first tier. The number of adders in the second tier may be half of the number of adders in the first tier, and each adder in the second tier may accumulate the outputs of two adders in the first tier. The adder tree may include one or more other tiers. The last tier may include a single adder that accumulates outputs of adders in the second last tier to compute a partial sum of the sparse cell 500.

The weight register files 520 store weights to be processed in MAC operations. In the embodiments of FIG. 5, four weight register files 520 are grouped into a storage set that stores data to be used by a column of MAC units 510. There are four storage sets corresponding to the four columns of MAC units 510. In some embodiments, a weight register file 520 may correspond to a MAC unit 510 and store data to be processed by the MAC unit. In some embodiments, all the 16 weight register files 520 constitute a weight storage unit.

The activation register files 530 stores activations to be processed in MAC operations. In the embodiments of FIG. 5, four activation register files 530 are grouped into a storage set that stores data to be used by a row of MAC units 510. There are four storage sets corresponding to the four rows of MAC units 510. In some embodiments, an activation register file 530 may correspond to a MAC unit 510 and store data to be processed by the MAC unit. In some embodiments, all the 16 activation register files 530 constitute an activation storage unit. The row buffers 540 store outputs of the MAC units 510. Each row buffer 540 may drain outputs of a single row of MAC units 510.

The acceleration module 560 facilitates acceleration of computations in the sparse cell 500 based on mixed formats of weights. In the embodiments of FIG. 5, each acceleration module 560 may control acceleration of computations in a different MAC unit 510. The number of acceleration modules 560 in the sparse cell 500 is the same as the number of MAC units 510 in the sparse cell 500. In other embodiments, an acceleration module 560 may control acceleration in multiple MAC units 510. As shown FIG. 5, each acceleration module 560 includes a storage unit 565 and a control logic 567. The storage unit 565 stores mixed-format maps. The control logic 567 may control distributions of activations and weights stored from the weight register files 520 and the activation register files 530 to the MAC units 510 based on mixed-format maps. In some embodiments, the control logic 567 may distribute a weight operand and a corresponding activation operation to a MAC unit 510 for an MAC operation. The weight operand may be a subblock (e.g., a column) of a weight block. All the weights in the weight operand may be in the same output channel and have the same spatial position, but the weights may be in different input channels from each other.

In some embodiments, a weight operand may include one or more uncompressed weight and one or more compressed weights. The control logic 567 may distribute compressed weights to MAC units 510 in a different manner from which the control logic 567 distributes uncompressed weights. In some embodiments (e.g., embodiments in which the compressed weights are zeros), the control logic 567 may select nonzero weights stored in the weight register files 520 based on the mixed-format map and distribute these nonzero weights to the MAC unit 510 for computation. The control logic 567 may also distribute activations, which correspond to the nonzero weights, to the MAC unit 510 from in the activation register files 530. The control logic 567 may ignore zero weights and activations corresponding the zero weights so that these weights and activations can be skipped from computation.

In other embodiments (e.g., embodiments in which the compressed weights have a lower precision than the uncompressed weights), the control logic 567 may distribute both compressed weights and uncompressed weights to the MAC unit 510 but in different manners. For example, the control logic 567 may distribute one compressed weight to the MAC unit 510 for one computation cycle of the MAC unit 510 but distribute one uncompressed weight to the MAC unit 510 for multiple computation cycles of the MAC unit 510. The MAC unit 510 may have a multiplier that can compute a product of a compressed weight with its corresponding activation in one computation cycle. The multiplier may compute multiple products for an uncompressed weight. Each of these products may be a result of multiplying a portion of the uncompressed weight with the corresponding activation in one computation cycle. One or more of these products may be shifted and then accumulated with one or more other products to compute the product of the uncompressed weight and the activation. As another example, the control logic 567 may distribute multiple compressed weights to the MAC unit 510 for one computation cycle of the MAC unit 510 but distribute one uncompressed weight to the MAC unit 510 for one computation cycle of the MAC unit 510. The MAC unit 510 in this example may have multiple multipliers that can compute multiple products for a uncompressed weight in one operating cycle, in which each multiplier may multiply a portion of the uncompressed weight with the corresponding activation. Each multiplier may multiply a compressed weight with the corresponding activation in one compute cycle so that multiple multipliers can handle multiple uncompressed weights in one computation cycle.

As shown in FIG. 5, the sparse cell 500 is associated with multiplexers (MUXs) 503, 504, 505, and 506. In other embodiments, the sparse cell 500 may be associated with a different number of MUXs or other devices. The MUX 503 facilitates loading weights, e.g., from the local memory 340, into the weight register files 520. The MUX 504 facilitates loading activations, e.g., from the local memory 340, into the activation register files 530. The MUX 505 facilitates loading mixed-format maps into the storage unit 565. The MUX 506 may be a drain MUX that can facilitate draining outputs of the MAC units 510, e.g., to the local memory 340.

FIG. 6 illustrates a sparse cell array 570, in accordance with various embodiments. The sparse cell array 570 may be an example of the processing engine 370 in FIG. 3. In FIG. 6, the sparse cell array 570 includes sparse cells 580 (individually referred to as "sparse cell 580") arranged in four columns and four rows, an activation memory 590, and a weight memory 595. In other embodiments, the sparse cell array 570 may include fewer, more, or different components. For instance, the sparse cell array 570 may include a different number of columns, rows, or sparse cells 580.

Each sparse cell 580 may perform accelerated MAC operations. MAC operations in the sparse cells 580 may be accelerated based on mixed formats of weights. An embodiment of a sparse cell 580 may be the sparse cell 500 in FIG. 5. The activation memory 590 stores activations, such as activations in input tensors of neural network operations. Activations may be loaded from the activation memory 590 to sparse cells 580, e.g., to activation register files. The weight memory 595 stores weights, such as weights in filters of neural network operations. Weights may be loaded from the weight memory 595 to sparse cells 580, e.g., to weight register files. The activation memory 590 or weight memory 595 may be a buffer.

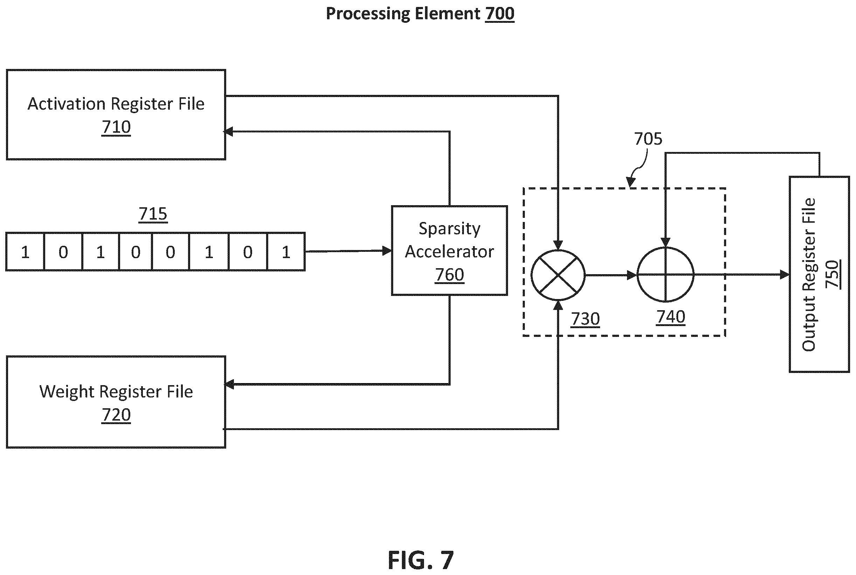

FIG. 7 illustrates an example PE 700, in accordance with various embodiments. The PE 700 may be a unit component of a processing cell, e.g., a processing cell in the processing engine 370. In the embodiments of FIG. 7, the PE 700 includes an MAC unit 705, an activation register file 710, a weight register file 720, an output register file 750, and a sparsity accelerator 760. The MAC unit 705 includes a multiplier 730 and an adder 740. In other embodiments, the PE 700 may include fewer, more, or different components.

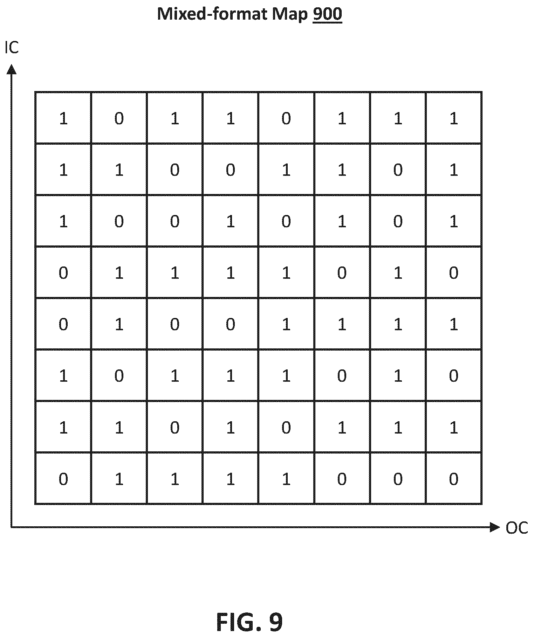

The activation register file 710 stores an activation operand, which may be a context. The activation register file 710 may be an example of the activation register files 930 in FIG. 9. The weight register file 720 stores a weight operand. The weight register file 720 may be an example of the weight register files 920 in FIG. 9. The activation operand and weight operand may be loaded from a memory (e.g., the memory 340) into the activation register file 710 and the weight register file 720, respectively. The sparsity accelerator 760 receives a sparsity bitmap 715 that corresponds to the sparse tensor in the weight register file 720. The sparsity bitmap 715 may be a combined sparsity bitmap when the MAC unit 705 operates in a combined compute mode. The sparsity bitmap 715 may be an activation sparsity bitmap when the MAC unit 705 operates in an activation compute mode. The sparsity bitmap 715 may be a weight sparsity bitmap when the MAC unit 705 operates in a weight compute mode. The sparsity bitmap 715 may have the same size (e.g., the same number of elements) as or a larger size than the activation operand or the weight operand.

Using the sparsity bitmap 715, the sparsity accelerator 760 selects four activations from the activation register file 710 and selects four weights from the weight register file 720. The sparsity accelerator 760 transmits the selected activations and weights to the multiplier 730. These selected data elements correspond to the nonzero elements of the sparsity bitmap 715. The four selected activations and the four selected weights may constitute four activation-weight pairs. The multiplier 730 may compute a product based on each activation-weight pair and therefore, compute four products in total. The four products may be provided to the adder 740. Even though FIG. 7 shows a single multiplier 730, the MAC unit 705 may include multiple multipliers that can perform multiple multiplication operations at the same time.

The adder 740 accumulates the four products and computes a unit-level internal partial sum. The four unselected elements of the dense tensor are not processed to save power and time, which would not impact the value of the unit-level internal partial sum. For instance, when the dense tensor is a dense activation tensor, the weights corresponding to the unselected activations are zeros so the products of the unselected activations and the weights would all be zero and have no contribution to the unit-level internal partial sum or other partial sums computed by the sparse cell. Similarly, when the dense tensor is a dense weight tensor, the activations corresponding to the unselected weights are zeros so the products of the unselected weights and the activations would all be zero and have no contribution to the unit-level internal partial sum or other partial sums computed by the sparse cell. In other embodiments, the MAC unit 705 may operate in a dense mode in which the sparsity bitmap 715 is not used and the sparsity accelerator 760 is inactive. The MAC unit 705 may process all the activations in the activation operand and all the weights in the weight operand.

The unit-level internal partial sum may be stored in the output register file 750. In some embodiments, the unit-level internal partial sum may be used multiple times. For instance, the activation operand may represent N data blocks in the input tensor of the convolution, where N is an integer greater than 1. Instead of processing all the N data blocks to compute N unit-level internal partial sums, the unit-level internal partial sum is computed once and used N times in the convolutional layers as N unit-level internal partial sums.

In some embodiments, the PE 700 receives one or more PE-level internal partial sums from one or more other PEs. The adder 740 or an accumulator (not shown in FIG. 7) can accumulate the one or more PE-level internal partial sums with the PE-level internal partial sum of the PE 700 and store the result of the accumulation (i.e., a multi-PE internal partial sum) in the output register file 750. The one or more other PEs may be in the same column as the PE 700 in a sparse cell. The multi-unit internal partial sum may be a column-level internal partial sum. In some embodiments, the PE-level internal partial sum of the PE 700 or the multi-unit internal partial sum may be sent to one or more other PEs for further accumulation.

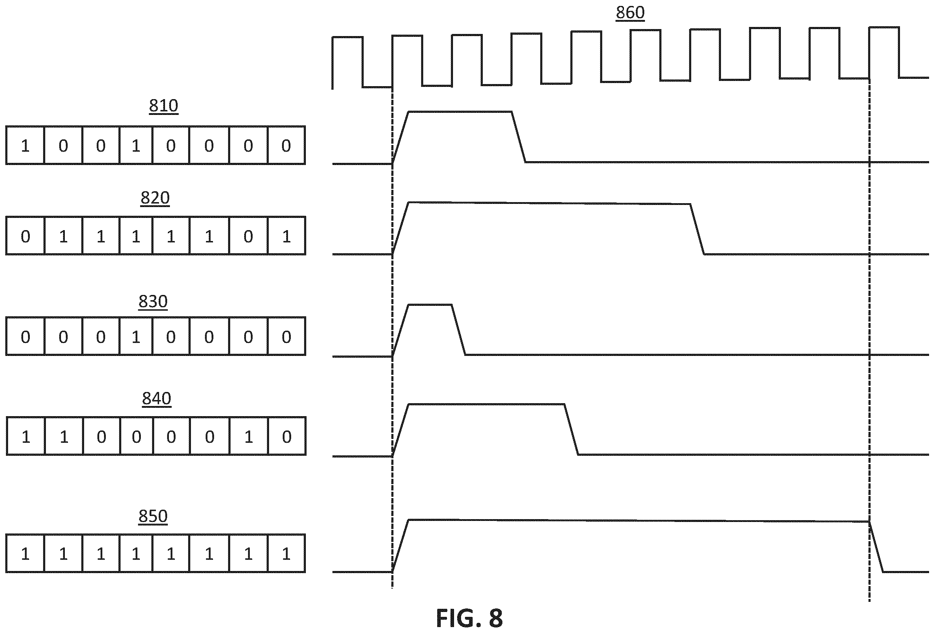

FIG. 8 illustrates a computation schedule for a group of PEs, in which computations by the PEs start at the same time, in accordance with various embodiments. For the purpose of illustration, there are five PEs in the group. In other embodiments, the group may include a different number of PEs. The PEs in the group may be arranged in a single column of a PE array, in multiple columns of a PE array, and so on. FIG. 8 shows sparsity bitmaps 810, 820, 830, 840, and 850 for the five PEs.

The PEs are associated with acceleration logic (e.g., the acceleration module 560 in FIG. 5) which can accelerate the computations in the PEs based on the sparsity bitmaps 810, 820, 830, 840, and 850. The number of ones in each of the sparsity bitmaps 810, 820, 830, 840, and 850 indicates the amount of computation that the corresponding PE will perform. Accordingly, the PE having the sparsity bitmap 850 has the highest workload, followed by the PE having the sparsity bitmap 820, then the PE having the sparsity bitmap 840 and the PE having the sparsity bitmap 810. The PE having the sparsity bitmap 830 has the lowest workload.

FIG. 8 also shows a clock cycle sequence 860. The clock cycle sequence 860 may be generated by a clock generator associated with the group of PEs, e.g., a clock generator of the DNN accelerator including the group of PEs. The clock cycle sequence 860 may be used to synchronize the operations of the PEs. In the embodiments of FIG. 8, the computations of the PEs are not scheduled based on the sparsity bitmaps 810, 820, 830, 840, and 850. Rather, the starts of the computations are synchronized and are all in the second clock cycle of the clock cycle sequence 860. The synchronized starts of the computations can cause a large current transient and therefore, result in a large voltage droop, which can degrade the DNN accelerator or even cause functional failures.

As the workloads of the PEs are different, the computation in the PEs takes different numbers of clock cycles and therefore, end in different clock cycles, as shown in FIG. 8. The computation in the PE having the sparsity bitmap 850 ends last. Thus, the total amount of time for completing the computations in the group of PEs is 8 clock cycles. The unbalanced workload of the PEs can impair the performance of the DNN accelerator.

FIG. 9 illustrates a mixed-format map 900, in accordance with various embodiments. The mixed-format map 900 is an example of mixed-format maps that can be used to accelerate computations in neural network operations. The mixed-format map 900 is a 2D tensor in an IC-OC space. For the purpose of illustration, the mixed-format map 900 has columns along the IC axis and rows along the OC axis. Each column has 8 elements, and each row has 8 elements. In some embodiments, each element may be a bit.

The mixed-format map 900 may represent the sparsity pattern of a weight block. The mixed-format map 900 may have the same shape and size as the weight block. Each element of the mixed-format map 900 corresponds to a weight in the weight block. The ones in the mixed-format map 900 indicate that the corresponding weights are uncompressed. For instance, the weights are nonzero or have a higher precision (e.g., INT8, FP16, BF16, FP32, etc.). The zeros in the mixed-format map 900 the corresponding weights are compressed. For instance, the weights are nonzero or have a lower precision (e.g., INT4, etc.). As shown in FIG. 9, each column in the mixed-format map 900 has three zeros and five ones, meaning all the columns have the same compression ratio. In some embodiments, each column may be provided to a PE for computations, e.g., MAC operation. The mixed-format map 900 may be distributed to 8 PEs that may operate simultaneously. The workload of a PE processing a compressed weight would be less than the workload of processing an uncompressed weight. Given the same compression ratio shared by all the columns, the workloads of the 8 PEs may be the same or substantially similar. The balanced workload among the PEs can optimize the efficiency and performance of the DNN accelerator running the neural network operation.

The weight block corresponding to the mixed-format map 900 may be part of a weight tensor of the neural network operation. The number of input channels or the number of output channels of the neural network operation may be 8 or a multiple of 8. The weights in the weight block may have the same spatial position, such as the same (X, Y) coordinate. The weight tensor may include other weight blocks of weights having other spatial positions. Even though the compression ratios of other weight blocks may be different from the weight block corresponding to the mixed-format map 900, the columns within the same weight block may always have the same compression ratio for achieving balanced workloads of PEs.

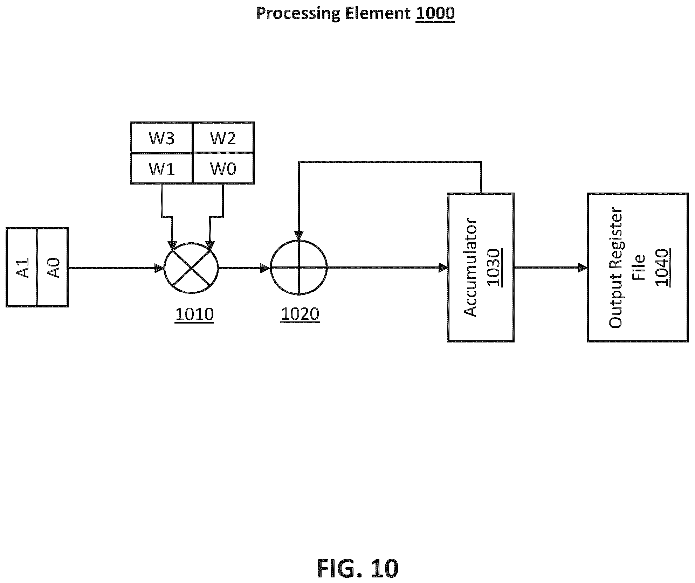

FIG. 10 illustrates an example PE 1000 with an 8×4 multiplier 1010, in accordance with various embodiments. The PE 1000 may be an example of PEs in the processing engine 370 in FIG. 3. As shown in FIG. 10, the PE 1000 also includes an adder 1020, an accumulator 1030, and an output register file 1040. The PE 1000 may include fewer, more, or different components not shown in FIG. 10. For example, the PE 1000 may include an activation register file or weight register file. As another example, the output register file 1040 may be outside the PE 1000.

FIG. 10 also shows two activations A0 and A1 and four weights W0-W3. In the embodiments of FIG. 10, the activations may be INT8 data elements, while the weights may be INT4 data elements. The precision of the weights is lower than the precision of the activations. In each computation cycle of the PE 1000, the multiplier 1010 may compute a product of an activation and a weight. The product may be sent to the adder 1020. The adder 1020 may add the product with one or more other products computed by the multiplier 1010. The output of the adder 1020 may be a partial sum. The partial sum may be sent to the accumulator 1030. The accumulator 1030 may receive one or more other partial sums computed by one or more other PEs and accumulate the partial sums. The output of the accumulator 1030 may be stored in the output register file 1040.

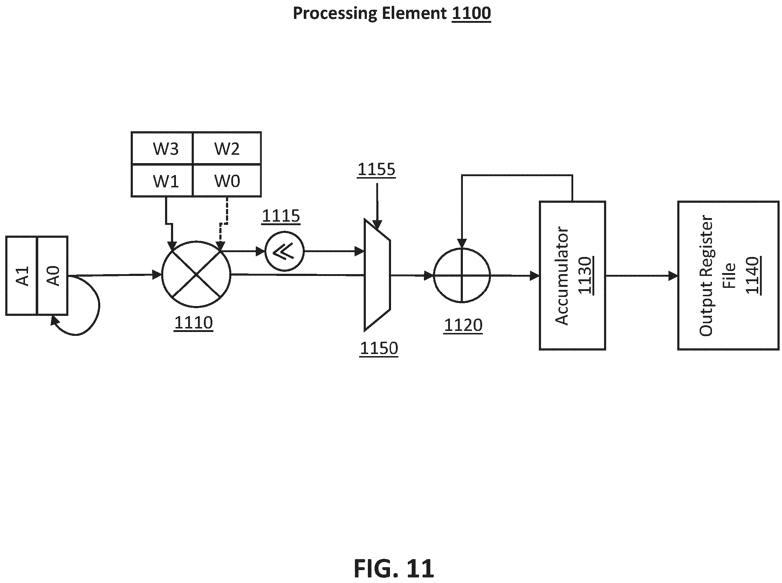

FIG. 11 illustrates an example PE 1100 that can perform computations with mixed-format weights, in accordance with various embodiments. The PE 1100 may be an example of PEs in the processing engine 370 in FIG. 3. As shown in FIG. 11, the PE 1100 includes a multiplier 1110, a shifter 1115, an adder 1120, an accumulator 1130, an output register file 1140, and a MUX 1150. The PE 1100 may include fewer, more, or different components not shown in FIG. 11. For example, the PE 1100 may include an activation register file or weight register file. As another example, the output register file 1140 may be outside the PE 1100. FIG. 11 also shows two activations A0 and A1 and four weights W0-W3. In the embodiments of FIG. 11, the activations may have the INT8 precision. The weights may have mixed precisions. In an example, W1 and W3 may have the same precision as the activations while W0 and W2 may have a lower precision, e.g., INT4.

The multiplier 1110 may an 8×4 multiplier. The multiplier 1110 may be the same or similar as the multiplier 1010 in FIG. 10. For each of the lower-precision weights, the multiplication of the weight and the corresponding activation is an 8×4 operation, which may be performed by the multiplier 1110 in a single computation cycle. For each of the higher-precision weights, the multiplication of the weight and the corresponding activation is an 8×8 operation, which may be performed by the multiplier 1110 in two computation cycles. In the first computation cycle, the multiplier 1110 may multiply the activation with 4 bits (e.g., the least significant 4 bits) of the weight to produce a first partial product. In the second computation cycle, the multiplier 1110 may multiply the activation with the other 4 bits (e.g., the most significant 4 bits) of the weight to produce a second partial product. The same activation may be loaded into the multiplier 1110 twice for the two computation cycles. The second partial product may be sent to the shifter 1115. The shifter 1115 shifts the second partial products, e.g., to the left. The output of the shifter 1115 may be sent to the adder 1120, and the adder 1120 may produce the product of the weight and the activation by adding the first partial product to the output of the shifter (i.e., the shifted second partial product).

The adder 1120 may also add other products computed by the multiplier 1110. The output of the adder 1120 may be a partial sum. The partial sum may be sent to the accumulator 1130. The accumulator 1130 may receive one or more other partial sums computed by one or more other PEs and accumulate the partial sums. The output of the accumulator 1130 may be stored in the output register file 1140. The adder 1120 may be the same or similar as the adder 1020. The accumulator 1130 may be the same or similar as the accumulator 1030. The output register file 1140 may be the same or similar as the output register file 1040.

The mixed-format computations in the PE 1100 may be facilitated by the MUX 1150. The MUX 1150 may receive input signals from the multiplier 1110 and shifter 1115. The MUX 1150 may also receive a control signal 1155 and select either the input signal from the multiplier 1110 or the input signal from the shifter 1115 based on the control signal. The control signal may be an element in a mixed-format map that corresponds to the weight being processed by the PE 1100. When the element in the mixed-format map indicates that the weight is compressed, the MUX 1150 may select the input signal from the multiplier 1110. When the element in the mixed-format map indicates that the weight is uncompressed, the MUX 1150 may select the input signal from the shifter 1115.

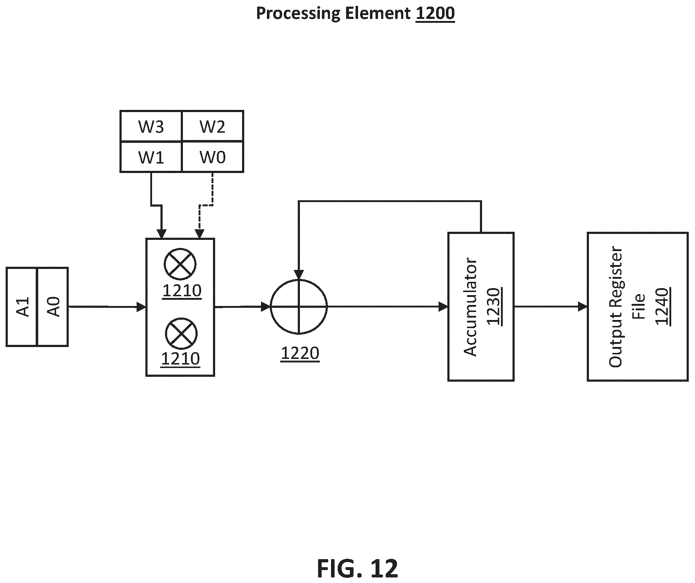

FIG. 12 illustrates another example PE 1200 that can perform computations with mixed-format weights, in accordance with various embodiments. The PE 1200 may be an example of PEs in the processing engine 370 in FIG. 3. As shown in FIG. 12, the PE 1200 includes two multipliers 1210 (individually referred to as "multiplier 1210"), an adder 1220, an accumulator 1230, and an output register file 1240. The PE 1200 may include fewer, more, or different components not shown in FIG. 12. For example, the PE 1200 may include an activation register file or weight register file. As another example, the output register file 1240 may be outside the PE 1200. Also, the PE 1200 may include more than two multipliers 1210. FIG. 12 also shows two activations A0 and A1 and four weights W0-W3. In the embodiments of FIG. 12, the activations may have the INT8 precision. The weights may have mixed precisions. In an example, W1 and W3 may have the same precision as the activations while W0 and W2 may have a lower precision, e.g., INT4.

The multiplier 1210 may an $8 \times 4$ multiplier. The multiplier 1210 may be the same or similar as the multiplier 1010 in FIG. 10. In some embodiments, the two lower-precision weights W0 and W2 may be loaded into the multipliers 1210, respectively, for one computation cycle. The multipliers 1210 may each perform an $8 \times 4$ operation for multiplying an activation and a lower-precision weight. The higher-precision weight W1 or W3 may be split into two elements and sent to the two multipliers 1210, respectively. The multipliers 1210 may each perform an $8 \times 4$ operation for multiplying an activation and half of the higher-precision weight. The adder 1220 may add the partial products computed by the multipliers 1210 and produce the produce of the higher-precision weight and the activation. Within one computation cycle, the PE 1200 may process two lower-precision weights or one higher-precision weight.

The adder 1220 may also add other products computed by the multiplier 1210. The output of the adder 1220 may be a partial sum. The partial sum may be sent to the accumulator 1230. The accumulator 1230 may receive one or more other partial sums computed by one or more other PEs and accumulate the partial sums. The output of the accumulator 1230 may be stored in the output register file 1240. The adder 1220 may be the same or similar as the adder 1020. The accumulator 1230 may be the same or similar as the accumulator 1030. The output register file 1240 may be the same or similar as the output register file 1040.

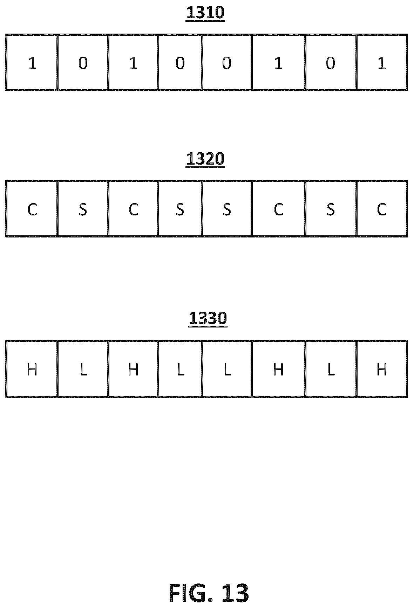

FIG. 13 illustrates an example bitmap 1310 used for accelerating computations in a PE, in accordance with various embodiments. The bitmap 1300 may be a mixed-format map for a weight operand to be processed by a PE. The bitmap 1300 may corresponds to a weight vector within a weight block and indicate the positions of compressed weights (if any) in the weight vector. For the purpose of illustration, the bitmap 1310 has eight bits. In other embodiments, the bitmap 1310 may have a different length.

The bitmap 1310 may be used to control the operation mode of the PE. In some embodiments (e.g.,

embodiments in which the weight compression operation is a pruning operation), the bitmap 1310 may correspond to an operation mode map 1320. For a weight corresponding to a one bit in the bitmap 1310, the PE may compute, which is represented by "C" in the operation mode map 1320. For a weight corresponding to a zero bit in the bitmap 1310, the PE may skip computation, which is represented by "S" in the operation mode map 1320.

In other embodiments (e.g., embodiments in which the weight compression operation is a precision reduction operation), the bitmap 1310 may correspond to an operation mode map 1330. For a weight corresponding to a one bit in the bitmap 1310, the PE may operate in a high-precision mode, which is represented by "H" in the operation mode map 1330. For a weight corresponding to a zero bit in the bitmap 1310, the PE may operate in a low-precision mode, which is represented by "L" in the operation mode map 1330.

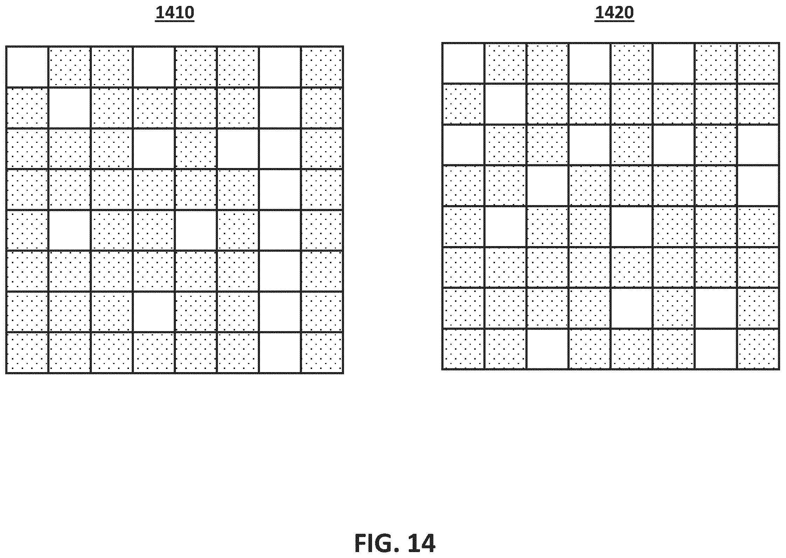

FIG. 14 illustrates mixed-format maps 1410 and 1420 of different patterns, in accordance with various embodiments. The mixed-format map 1410 or mixed-format map 1420 may show the mixed-format pattern of a weight block. Each column in the mixed-format map 1410 or mixed-format map 1420 may be along the IC axis, while each row in the mixed-format map 1410 or mixed-format map 1420 may be along the OC axis. Each box in FIG. 14 represents an element in the mixed-format map 1410 or mixed-format map 1420 and corresponds to a weight in the corresponding weight block. The boxes highlighted by a dotted pattern represent uncompressed weights, while the empty boxes represent compressed weights.

As shown in FIG. 14, different columns of the mixed-format map 1410 have different numbers of empty weights, while all the columns of the mixed-format map 1420 have the same number (i.e., 2) of empty weights. That indicates that different columns of the weight block corresponding to the mixed-format map 1410 has different numbers of compressed weights, while all the columns of the weight block corresponding to the mixed-format map 1420 has the same number (i.e., 2) of compressed weights. Compared with the mixed-format pattern in the mixed-format map 1410, the mixed-format pattern in the mixed-format map 1420 can introduce more balanced workloads of PEs in the DNN accelerator running the neural network operation. Therefore, the mixed-format pattern in the mixed-format map 1420 can lead to better performance of the DNN accelerator.

FIG. 15 illustrates an example search tree 1500, in accordance with various embodiments. For the purpose of illustration, the search tree may be used, e.g., by the compiler 440, for pruning 3 $r \times c$ weight blocks ($W^1$, $W^2$, and $W^3$) with K = 3. The search tree 1500 includes four levels. The first/top level includes a root node represented by a circled R in FIG. 15. The second level represents possible zero allocations for the first weight block $W^1$. The third level represents possible zero allocations for the second weight block $W^2$. The fourth/bottom

level represents possible zero allocations for the third weight block $W^3$. Each node in the second, third, and fourth level has a number, which indicates the number of zeros to be allocated per column within the corresponding weight block. For each weight block, 0, 1, 2, or 3 zeros may be allocated per column. A complete path from the root represents a validated zero partition. For example, nodes 0, 0, 3 on the leftmost path represent allocating no zeros to the first two weight blocks $W^1$ and $W^2$ but allocating 3 zeros per column for the third weight block, $W^3$. As another example, nodes 3, 0, 0 on the rightmost path represent allocating no zeros to the first weight block $W^1$ but allocating 3 zeros per column for the second weight block $W^2$ and the third weight block, $W^3$.

The compiler 440 may find the path with the lowest cumulative error metric (such as MSE). In some embodiments, a Depth-First Search (DFS) strategy for discovering the best path within the search tree 1500 may be used. The compiler 440 may first initiate the search at the root node with an initial MSE of 0. As it proceeds with the DFS, the compiler 440 may traverse the tree depthwise, exploring each branch as deeply as possible before backtracking. At each node, the compiler 440 may compute the MSE for the current allocation of zeros using, updating the cumulative sum of MSE along the path from the root to the current node. This cumulative MSE may represent the error metric for the path from the root to this node. When the compiler 440 reaches a leaf node (e.g., a node in the fourth level), the cumulative sum reflects the total error metric for the path under consideration.

During the recursive exploration of each branch, the compiler 440 may continually update and compare the cumulative error metric with the best error metric found so far (initially set to infinity). When the current path's error metric (at a leaf node) is lower, the compiler 440 may update the best solution accordingly. When the error metric (even for a partial path) exceeds the best found so far, or when the compiler 440 reaches a leaf node (representing the end of a potential solution path), the compiler 440 may backtrack to the previous node and explore another branch.

In some embodiments, this iterative process continues until the compiler 440 have explored all possible paths or until a predefined termination condition is met. By systematically computing the cumulative MSE for each path and prioritizing deeper paths, the compiler 440 can efficiently navigate through the tree. This method can enable identification of the path with the lowest cumulative error metric, which can lead to an optimal or near-optimal solution for minimizing MSE within the given search space.

After the compiler 440 finds the optimal or near-optimal solution, the compiler 440 may compress the weight blocks accordingly. In an example in which the solution is 0, 1, 2, the compiler 440 may not modify any weights in the first weight block $W^1$, change one weight per column to zero for the second weight block $W^2$, and change two weights per column to zeros for the third weight block $W^3$. Even though zeros are used as an example for compressed weights, the compiler 440 may use the search tree to find weights that will be compressed by reducing precision.

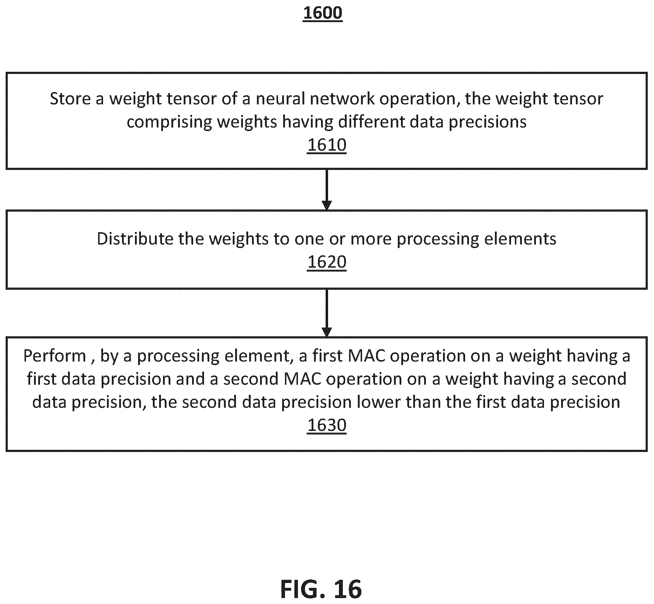

FIG. 16 is a flowchart of a method 1600 of executing a DNN, in accordance with various embodiments. The method 1600 may be performed by the DPU 330 in FIG. 3. Although the method 1600 is described with reference to the flowchart illustrated in FIG. 16, many other methods for executing DNNs may alternatively be used. For example, the order of execution of the steps in FIG. 16 may be changed. As another example, some of the steps may be changed, eliminated, or combined.

The DPU 330 stores 1610 a weight tensor of a neural network operation. The weight tensor includes weights having different data processing. In some embodiments, the weight tensor comprises subtensors. A subtensor comprises one or more weights having a first data precision and one or more other weights having a second data precision. The second data precision is lower than the first data precision. In an example, the first data precision is INT8, while the second data precision is INT4. In some embodiments, the one or more weights and one or more other weights are all in different input channels of the neural network operation.

The DPU 330 distributes 1620 the weights to one or more PEs. In some embodiments, the DPU 330 distributes different ones of the subtensors in the weight tensor to different PEs. In some embodiments, the different ones of the subtensors have the same number of weights having the second data precision.

The DPU 330 performs 1630, by a PE, a first MAC operation on a weight having a first data precision and a second MAC operation on a weight having a second data precision. The data precision is lower than the first data precision. In some embodiments, the PE receives a subtensor that includes the two weights. In some embodiments, the first MAC operation is performed in more computation cycles than the second MAC operation. In some embodiments, for performing the first MAC operation, the DPU 330 computes, by a multiplier in the PE, a first product and a second product in two computation cycles, respectively. The DPU 330 shifts, by a shifter in the PE, the first product. The DPU 330 accumulates, by an adder in the PE, an output of the shifter with the second product.

In some embodiments, the PEs comprises a plurality of multipliers. The first MAC operation is performed by using more multipliers than the second MAC operation. The DPU 330 distributes more activations to the PE for the second MAC operation than the first MAC operation. In some embodiments, the first MAC operation or the second MAC operation is performed further on an input activation of the neural network operation. The input activation has the first data precision.

FIG. 17 is a block diagram of an example computing device 2000, in accordance with various embodiments. In some embodiments, the computing device 2000 can be used as at least part of the DNN system 300. A number of components are illustrated in FIG. 17 as included in the computing device 2000, but any one or more of these components may be omitted or duplicated, as suitable for the application. In some embodiments, some or all of the components included in the computing device 2000 may be attached to one or more motherboards. In some embodiments, some or all of these components are fabricated onto a single system on a chip (SoC) die. Additionally, in various embodiments, the computing device 2000 may not include one or more of the components illustrated in FIG. 17, but the computing device 2000 may include interface circuitry for coupling to the one or more components. For example, the computing device 2000 may not include a display device 2006, but may include display device interface circuitry (e.g., a connector and driver circuitry) to which a display device 2006 may be coupled. In another set of examples, the computing device 2000 may not include an audio input device 2018 or an audio output device 2008 but may include audio input or output device interface circuitry to which an audio input device 2018 or audio output device 2008 may be coupled.

The computing device 2000 may include a processing device 2002 (e.g., one or more processing devices). The processing device 2002 processes electronic data from registers and/or memory to transform that electronic data into other electronic data that may be stored in registers and/or memory. The computing device 2000 may include a memory 2004, which may itself include one or more memory devices such as volatile memory (e.g., DRAM), nonvolatile memory (e.g., read-only memory (ROM)), high bandwidth memory (HBM), flash memory, solid state memory, and/or a hard drive. In some embodiments, the memory 2004 may include memory that shares a die with the processing device 2002. In some embodiments, the memory 2004 includes one or more non-transitory computer-readable media storing instructions executable to perform operations for executing DNNs (e.g., the method 1600 described in conjunction with FIG. 16) or some operations performed by one or more components of the DNN system 300. The instructions stored in the one or more non-transitory computer-readable media may be executed by the processing device 2002.

In some embodiments, the computing device 2000 may include a communication chip 2012 (e.g., one or more communication chips). For example, the communication chip 2012 may be configured for managing wireless communications for the transfer of data to and from the computing device 2000. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not.

The communication chip 2012 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication chip 2012 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication chip 2012 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chip 2012 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 2012 may operate in accordance with other wireless protocols in other embodiments. The computing device 2000 may include an antenna 2022 to facilitate wireless communications and/or to receive other wireless communications (such as AM or FM radio transmissions).

In some embodiments, the communication chip 2012 may manage wired communications, such as electrical, optical, or any other suitable communication protocols (e.g., the Ethernet). As noted above, the communication chip 2012 may include multiple communication chips. For instance, a first communication chip 2012 may be dedicated to shorter-range wireless communications such as Wi-Fi or Bluetooth, and a second communication chip 2012 may be dedicated to longer-range wireless communications such as global positioning system (GPS), EDGE, GPRS, CDMA, WiMAX, LTE, EV-DO, or others. In some embodiments, a first communication chip 2012 may be dedicated to wireless communications, and a second communication chip 2012 may be dedicated to wired communications.

The computing device 2000 may include battery/power circuitry 2014. The battery/power circuitry 2014 may include one or more energy storage devices (e.g., batteries or capacitors) and/or circuitry for coupling components of the computing device 2000 to an energy source separate from the computing device 2000 (e.g.,

AC line power).

The computing device 2000 may include a display device 2006 (or corresponding interface circuitry, as discussed above). The display device 2006 may include any visual indicators, such as a heads-up display, a computer monitor, a projector, a touchscreen display, a liquid crystal display (LCD), a light-emitting diode display, or a flat panel display, for example.

The computing device 2000 may include an audio output device 2008 (or corresponding interface circuitry, as discussed above). The audio output device 2008 may include any device that generates an audible indicator, such as speakers, headsets, or earbuds, for example.

The computing device 2000 may include an audio input device 2018 (or corresponding interface circuitry, as discussed above). The audio input device 2018 may include any device that generates a signal representative of a sound, such as microphones, microphone arrays, or digital instruments (e.g., instruments having a musical instrument digital interface (MIDI) output).

The computing device 2000 may include a GPS device 2016 (or corresponding interface circuitry, as discussed above). The GPS device 2016 may be in communication with a satellite-based system and may receive a location of the computing device 2000, as known in the art.

The computing device 2000 may include another output device 2010 (or corresponding interface circuitry, as discussed above). Examples of the other output device 2010 may include an audio codec, a video codec, a printer, a wired or wireless transmitter for providing information to other devices, or an additional storage device.

The computing device 2000 may include another input device 2020 (or corresponding interface circuitry, as discussed above). Examples of the other input device 2020 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 2000 may have any desired form factor, such as a handheld or mobile computer system (e.g., a cell phone, a smart phone, a mobile internet device, a music player, a tablet computer, a laptop computer, a netbook computer, an ultrabook computer, a personal digital assistant (PDA), an ultramobile personal computer, etc.), a desktop computer system, a server or other networked computing component, a printer, a scanner, a monitor, a set-top box, an entertainment control unit, a vehicle control unit, a digital camera, a digital video recorder, or a wearable computer system. In some embodiments, the computing device 2000 may be any other electronic device that processes data.

The following paragraphs provide various examples of the embodiments disclosed herein.

Example 1 provides an apparatus, including a memory configured to store a weight block of a neural network operation, the weight block including weights having different data precisions; one or more PEs, a PE including a multiply-accumulate (MAC) unit; and a control unit configured to distribute the weights to the one or more PEs, in which the PE is configured to perform a first MAC operation on a weight having a first data precision and a second MAC operation on a weight having a second data precision, and the second data precision is lower than the first data precision.

Example 2 provides the apparatus of example 1, in which the weight block includes a plurality of subblocks, a subblock includes one or more weights having the first data precision and one or more other weights having the second data precision, and the one or more weights and one or more other weights are all in different input channels of the neural network operation.

Example 3 provides the apparatus of example 2, in which the one or more weights and one or more other weights are all in a same OC of the neural network operation.

Example 4 provides the apparatus of any one of example 2 or 3, in which the subblocks have a same number of weights having the second data precision.

Example 5 provides the apparatus of any one of examples 1-4, in which the first MAC operation is performed in more computation cycles than the second MAC operation.

Example 6 provides the apparatus of example 5, in which the MAC unit includes a multiplier, a shifter, and an adder.

Example 7 provides the apparatus of example 6, in which the multiplier is configured to compute a first product and a second product in two computation cycles, respectively, for the first MAC operation, the shifter is configured to shift the first product, and the adder is configured to add an output of the shifter with the second product.

Example 8 provides the apparatus of any one of examples 1-4, in which the PEs includes a plurality of multipliers, and the first MAC operation is performed by using more multipliers than the second MAC operation.

Example 9 provides the apparatus of example 8, in which the first MAC operation is performed in a first computation cycle, the second MAC operation is performed in a second computation cycle, and the control unit is configured to distribute more activations to the PE for the second computation cycle than the first computation cycle.

Example 10 provides the apparatus of any one of examples 1-9, in which the first MAC operation or the second MAC operation is performed further on an input activation of the neural network operation, and the input activation has the first data precision.

Example 11 provides a method of executing a neural network, the method including storing a weight block of a neural network operation, the weight block including weights having different data precisions; distributing the weights to one or more PEs; and performing, by a PE, a first MAC operation on a weight having a first data precision and a second MAC operation on a weight having a second data precision, the second data precision lower than the first data precision.

Example 12 provides the method of example 11, in which the weight block includes subblocks, a subblock includes one or more weights having the first data precision and one or more other weights having the second data precision, and the one or more weights and one or more other weights are all in different input channels of the neural network operation.

Example 13 provides the method of example 12, in which the one or more weights and one or more other weights are all in a same OC of the neural network operation.

Example 14 provides the method of any one of example 12 or 13, in which the different ones of the subblocks have a same number of weights having the second data precision.

Example 15 provides the method of any one of examples 11-14, in which the first MAC operation is performed in more computation cycles than the second MAC operation.

Example 16 provides the method of any one of examples 11-15, in which performing the first MAC operation includes computing, by a multiplier in the PE, a first product and a second product in two computation cycles, respectively; shifting, by a shifter in the PE, the first product; and accumulating, by an adder in the PE, an output of the shifter with the second product.

Example 17 provides the method of any one of examples 11-14, in which the PE includes a plurality of multipliers, the first MAC operation is performed by using more multipliers than the second MAC operation, and the control unit is configured to distribute more activations to the PE for the second MAC operation than the first MAC operation.

Example 18 provides one or more non-transitory computer-readable media storing instructions executable to perform operations for executing a neural network, the operations including storing a weight block of a neural network operation, the weight block including weights having different data precisions; distributing the weights to one or more PEs; and performing, by a PE, a first MAC operation on a weight having a first data precision and a second MAC operation on a weight having a second data precision, the second data precision lower than the first data precision.

Example 19 provides the one or more non-transitory computer-readable media of example 18, in which performing the first MAC operation includes computing, by a multiplier in the PE, a first product and a second product in two computation cycles, respectively; shifting, by a shifter in the PE, the first product; and accumulating, by an adder in the PE, an output of the shifter with the second product.

Example 20 provides the one or more non-transitory computer-readable media of example 18, in which the PE includes a plurality of multipliers, the first MAC operation is performed by using more multipliers than the second MAC operation, and the control unit is configured to distribute more activations to the PE for the second MAC operation than the first MAC operation.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

## Claims

1. An apparatus, comprising:

   a memory configured to store a weight block of a neural network operation, the weight block comprising weights having different data precisions; one or more processing elements, a processing element comprising a multiply-accumulate (MAC) unit; and a control unit configured to distribute the weights to the one or more processing elements, wherein the processing element is configured to perform a first MAC operation on a weight having a first data precision and a second MAC operation on a weight having a second data precision, and the second data precision is lower than the first data precision.

2. The apparatus of claim 1, wherein the weight block comprises a plurality of subblocks, a subblock comprises one or more weights having the first data precision and one or more other weights having the second data precision, and the one or more weights and one or more other weights are all in different input channels of the neural network operation.

3. The apparatus of claim 2, wherein the one or more weights and one or more other weights are all in a same output channel of the neural network operation.

4. The apparatus of claim 2 or 3, wherein the subblocks have a same number of weights having the second data precision.

5. The apparatus of any one of claims 1-4, wherein the first MAC operation is performed in more computation cycles than the second MAC operation.

6. The apparatus of claim 5, wherein the MAC unit comprises a multiplier, a shifter, and an adder.

7. The apparatus of claim 6, wherein the multiplier is configured to compute a first product and a second product in two computation cycles, respectively, for the first MAC operation, the shifter is configured to shift the first product, and the adder is configured to add an output of the shifter with the second product.

8. The apparatus of any one of claims 1-7, wherein the processing elements comprises a plurality of multipliers, and the first MAC operation is performed by using more multipliers than the second MAC operation.

9. The apparatus of claim 8, wherein the first MAC operation is performed in a first computation cycle, the second MAC operation is performed in a second computation cycle, and the control unit is configured to distribute more activations to the processing element for the second computation cycle than the first computation cycle.

10. The apparatus of any one of claims 1-9, wherein the first MAC operation or the second MAC operation is performed further on an input activation of the neural network operation, and the input activation has the first data precision.

11. A method of executing a neural network, the method comprising:

    storing a weight block of a neural network operation, the weight block comprising weights having different data precisions;
    distributing the weights to one or more processing elements; and
    performing, by a processing element, a first MAC operation on a weight having a first data precision and a second MAC operation on a weight having a second data precision, the second data precision lower than the first data precision.

12. The method of claim 11, wherein the weight block comprises subblocks, a subblock comprises one or more weights having the first data precision and one or more other weights having the second data precision, and the one or more weights and one or more other weights are all in different input channels of the neural network operation.

13. The method of claim 11 or 12, wherein:

    the first MAC operation is performed in more computation cycles than the second MAC operation; or
the processing element comprises a plurality of multipliers, the first MAC operation is performed by using more multipliers than the second MAC operation, and the method further comprises distributing more activations to the processing element for the second MAC operation than the first MAC operation.

14. The method of any one of claims 11-13, wherein performing the first MAC operation comprises:

    computing, by a multiplier in the processing element, a first product and a second product in two computation cycles, respectively;
    shifting, by a shifter in the processing element, the first product; and
    accumulating, by an adder in the processing element, an output of the shifter with the second product.

15. One or more non-transitory computer-readable media storing instructions executable to perform the metho of any one of claims 11-14.

DNN <u>100</u>

Convolutional Layer <u>110</u>

Pooling Layer <u>120</u>

Fully-connected Layer <u>130</u>

FIG. 1

**FIG. 2**

EP 4 738 197 A1

**DNN System 300**

DNN Accelerator
302

FIG. 3

EP 4 738 197 A1

EP 4 738 197 A1

DNN Module
400

Interface Module
410

Training Module
420

Compressing Module
430

Compiler
440

Datastore
450

FIG. 4

FIG. 5

**FIG. 6**

FIG. 7

FIG. 8

EP 4 738 197 A1

Mixed-format Map 900

FIG. 9

EP 4 738 197 A1

**Processing Element 1000**

| W3 | W2 |
|----|----|
| W1 | W0 |

A1 | A0

1010

1020

Accumulator 1030

Output Register File 1040

**FIG. 10**

**Processing Element 1100**

FIG. 11

Processing Element **1200**

FIG. 12

**1310**

| 1 | 0 | 1 | 0 | 0 | 1 | 0 | 1 |

**1320**

| C | S | C | S | S | C | S | C |

**1330**

| H | L | H | L | L | H | L | H |

**FIG. 13**

EP 4 738 197 A1

FIG. 14

Search Tree 1500

FIG. 15

Store a weight tensor of a neural network operation, the weight tensor
comprising weights having different data precisions
1610

Distribute the weights to one or more processing elements
1620

Perform , by a processing element, a first MAC operation on a weight having a
first data precision and a second MAC operation on a weight having a second
data precision, the second data precision lower than the first data precision
1630

**FIG. 16**

COMPUTING DEVICE
2000

PROCESSING DEVICE
2002

COMMUNICATION CHIP
20 12

MEMORY
1704

BATTERY/POWER
CIRCUITRY
1714

DISPLAY DEVICE
20 06

GPS DEVICE
20 16

AUDIO OUTPUT DEVICE
20 08

AUDIO INPUT DEVICE
20 18

OTHER OUTPUT DEVICE
20 10

OTHER INPUT DEVICE
20 20

A
N
T
E
N
N
A

20 22

FIG. 17

| | Europäisches Patentamt European Patent Office Office européen des brevets | **EUROPEAN SEARCH REPORT** | **Application Number** EP 25 19 7867 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XUEYING WU ET AL: "Block-Wise Mixed-Precision Quantization: Enabling High Efficiency for Practical ReRAM-based DNN Accelerators", ARXIV.ORG, CORNELL UNIVERSITY LIBRARY, 201 OLIN LIBRARY CORNELL UNIVERSITY ITHACA, NY 14853, 17 October 2023 (2023-10-17), XP091638677, | 1-5,8, 10-13,15 | INV. G06N3/0464 G06N3/0495 G06N3/063 G06F5/01 G06F7/544 |
| A | * figures 4, 6 * * sections section III.A and IV * * Algorithm 1 * ----- | 6,7,9,14 | ADD. G06N3/082 G06N3/084 G06N3/09 |
| X | XIZI CHEN ET AL: "Tight Compression: Compressing CNN Through Fine-Grained Pruning and Weight Permutation for Efficient Implementation", ARXIV.ORG, CORNELL UNIVERSITY LIBRARY, 201 OLIN LIBRARY CORNELL UNIVERSITY ITHACA, NY 14853, 3 April 2021 (2021-04-03), XP081932024, | 1,11,15 | |
| Y | * sections III.D and IV * * figures 6, 8, 9, 10 * | 1,6,7, 11,14,15 | TECHNICAL FIELDS SEARCHED (IPC) |
| A | ----- | 9 | G06N |
| Y | FU YONGGAN ET AL: "2-in-1 Accelerator: Enabling Random Precision Switch for Winning Both Adversarial Robustness and Efficiency", PROCEEDINGS OF THE 1ST INTERNATIONAL WORKSHOP ON EXTREME HETEROGENEITY SOLUTIONS, ACMPUB27, NEW YORK, NY, USA, 18 October 2021 (2021-10-18), pages 225-237, XP058988428, DOI: 10.1145/3466752.3480082 ISBN: 978-1-4503-9431-4 | 1,6,7, 11,14,15 | |
| A | * figures 4, 5, 6 * * Algorithm 1 * * section 2.4 * ----- | 9 | |

The present search report has been drawn up for all claims

| Place of search | Date of completion of the search | Examiner |
|---|---|---|
| The Hague | 15 January 2026 | Theissing, Simon |

EPO FORM 1503 03.82 (P04C01)